# EUROPÄISCHE PATENTANMELDUNG

(11) **EP 4 818 650 A1**
(43) Veröffentlichungstag der Anmeldung: **07.10.2026**
(21) Anmeldenummer: 26167197.8
(22) Anmeldetag: 24.03.2026
(51) Int. Cl.: G01F 1/66, G01F 1/667, G01F 15/02

(54) **VERFAHREN ZUM BETREIBEN EINES ULTRASCHALLDURCHFLUSSMESSGERÄTS UND ULTRASCHALLDURCHFLUSSMESSGERÄT**

(30) Priorität: 28.03.2025 DE 102025112218
(71) Anmelder: Krohne AG, 4019 Basel (CH)
(72) Erfinder: Huijzer, Arie, 3363 BS Sliedrecht (NL); van Klooster, Jeroen, 4005 GN Tiel (NL)
(74) Vertreter: Gesthuysen Patentanwälte

(57) **Zusammenfassung**

Beschrieben und dargestellt ist ein Verfahren (20) zum Betreiben eines Ultraschalldurchflussmessgeräts (1), wobei das Ultraschalldurchflussmessgerät (1) wenigstens ein Ultraschallwandlerpaar mit einem ersten Ultraschallwandler (2) und einem zweiten Ultraschallwandler (3),
wenigstens einen dritten Ultraschallwandler (4),
wenigstens eine Ultraschallwandlerhalteanordnung (5) und eine Steuer- und Auswerteeinheit (11) aufweist,
wobei die Ultraschallwandlerhalteanordnung (5) wenigstens einen Ultraschallwandlerhalter (5a, 5b) umfasst,
wobei die Ultraschallwandlerhalteanordnung (5) an einem Messrohr (6) angeordnet ist, wobei das Messrohr (6) eine Messrohrwand (8) aufweist, wobei in dem Messrohr (6) ein Medium (12) vorhanden ist, insbesondere wobei das Medium (12) durch das Messrohr (6) fließt,
wobei der erste und der zweite Ultraschallwandler (2,3) an der Ultraschallwandlerhalteanordnung (5) angeordnet sind,
wobei der erste Ultraschallwandler (2) und der zweite Ultraschallwandler (3) in Fließrichtung des Mediums (12) betrachtet derart versetzt zueinander angeordnet sind, dass sie zwischen sich einen Messpfad (7) durch die Ultraschallwandlerhalteanordnung (5), die Messrohrwand (8) und das Medium (12) aufspannen, sodass ein von dem ersten Ultraschallwandler (2) ausgesendetes Messsignal von dem zweiten Ultraschallwandler (3) empfangen wird und umgekehrt, wobei das Messsignal drei Materialien, nämlich die Ultraschallwandlerhalteanordnung (5), die Messrohrwand (8) und das Medium (12) durchläuft, und
wobei der dritte Ultraschallwandler (4) derart an der Ultraschallwandlerhalteanordnung (5) angeordnet ist, dass er wenigstens einen ersten Referenzpfad (9) durch die Ultraschallwandlerhalteanordnung (5), die Messrohrwand (8) und das Medium (12) definiert, wobei der dritte Ultraschallwandler (4) derart ausgebildet und angeordnet ist, dass er ein Referenzsignal, das sich entlang des ersten Referenzpfades (9) ausbreitet, empfängt und optional auch aussendet,
wobei die Steuer- und Auswerteeinheit (11) zur Ansteuerung der Ultraschallwandler (2, 3, 4, 16) und zur Auswertung der von den Ultraschallwandlern (2, 3, 4, 16) empfangenen Signale ausgebildet ist.

## Beschreibung

Die Erfindung geht aus von einem Verfahren zum Betreiben eines Ultraschalldurchflussmessgeräts, wobei das Ultraschalldurchflussmessgerät
wenigstens ein Ultraschallwandlerpaar mit einem ersten Ultraschallwandler und einem zweiten Ultraschallwandler,
wenigstens einen dritten Ultraschallwandler,
wenigstens eine Ultraschallwandlerhalteanordnung und eine Steuer- und Auswerteeinheit aufweist,
wobei die Ultraschallwandlerhalteanordnung wenigstens einen Ultraschallwandlerhalter umfasst,
wobei die Ultraschallwandlerhalteanordnung an einem Messrohr angeordnet ist, wobei das Messrohr eine Messrohrwand aufweist, wobei in dem Messrohr ein Medium vorhanden ist, insbesondere wobei das Medium durch das Messrohr fließt,
wobei der erste und der zweite Ultraschallwandler an der Ultraschallwandlerhalteanordnung angeordnet sind,
wobei der erste Ultraschallwandler und der zweite Ultraschallwandler in Fließrichtung des Mediums betrachtet derart versetzt zueinander angeordnet sind, dass sie zwischen sich einen Messpfad, der durch die Ultraschallwandlerhalteanordnung, die Messrohrwand und das Medium verläuft, aufspannen, sodass ein von dem ersten Ultraschallwandler ausgesendetes Messsignal von dem zweiten Ultraschallwandler empfangen wird und umgekehrt, wobei das Messsignal drei Materialien, nämlich die Ultraschallwandlerhalteanordnung, die Messrohrwand und das Medium durchläuft, und
wobei der dritte Ultraschallwandler derart an der Ultraschallwandlerhalteanordnung angeordnet ist, dass er wenigstens einen ersten Referenzpfad, der durch die Ultraschallwandlerhalteanordnung, die Messrohrwand und das Medium verläuft, definiert, wobei der dritte Ultraschallwandler derart ausgebildet und angeordnet ist, dass er ein Referenzsignal, das sich entlang des ersten Referenzpfades ausbreitet, empfängt und optional auch aussendet,
wobei die Steuer- und Auswerteeinheit zur Ansteuerung der Ultraschallwandler und zur Auswertung der von den Ultraschallwandlern empfangenen Signale ausgebildet ist.

Darüber hinaus betrifft die Erfindung ein Ultraschalldurchflussmessgerät umfassend
wenigstens ein Ultraschallwandlerpaar mit einem ersten Ultraschallwandler und einem zweiten Ultraschallwandler,
wenigstens einen dritten Ultraschallwandler,
wenigstens einer Ultraschallwandlerhalteanordnung, wobei die Ultraschallwandlerhalteanordnung wenigstens einen Ultraschallwandlerhalter umfasst, wobei die wenigstens eine Ultraschallwandlerhalteanordnung im Betrieb an einem Messrohr angeordnet ist, wobei das Messrohr eine Messrohrwand aufweist, wobei im Betrieb ein Medium in dem Messrohr angeordnet ist, insbesondere wobei im Betrieb ein Medium durch das Messrohr fließt,
wobei der erste und der zweite Ultraschallwandler an der Ultraschallwandlerhalteanordnung angeordnet sind,
wobei der erste Ultraschallwandler und der zweite Ultraschallwandler in Fließrichtung des Mediums betrachtet derart versetzt zueinander angeordnet sind, dass sie zwischen sich einen Messpfad, der durch die Ultraschallwandlerhalteanordnung, die Messrohrwand und das Medium verläuft, aufspannen, sodass ein von dem ersten Ultraschallwandler ausgesendetes Messsignal von dem zweiten Ultraschallwandler empfangen wird und umgekehrt, wobei das Messsignal drei Materialien, nämlich die Ultraschallwandlerhalteanordnung, die Messrohrwand und das Medium durchläuft, und
wobei der dritte Ultraschallwandler derart an der Ultraschallwandlerhalteanordnung angeordnet ist, dass er wenigstens einen ersten Referenzpfad, der durch die Ultraschallwandlerhalteanordnung, die Messrohrwand und das Medium verläuft, definiert, wobei der dritte Ultraschallwandler derart ausgebildet und angeordnet ist, dass er ein Referenzsignal, das sich entlang des ersten Referenzpfades ausbreitet, empfängt und optional auch aussendet,
wobei die Steuer- und Auswerteeinheit zur Ansteuerung der Ultraschallwandler und zur Auswertung der von den Ultraschallwandlern empfangenen Signale ausgebildet ist.

Zur Bestimmung der Strömungsgeschwindigkeit eines durch ein Messrohr fließenden Mediums mit einem Ultraschalldurchflussmessgerät werden die Laufzeit eines Messsignals, das sich zwischen zwei Ultraschallwandlern in Strömungsrichtung ausbreitet, sowie die Laufzeit eines Messsignals, das sich entgegen der Strömungsrichtung ausbreitet, erfasst und aus der Laufzeitdifferenz wird die Strömungsgeschwindigkeit bestimmt.

Insbesondere relevant für diese Berechnung ist der Teil der Laufzeit, in der sich das von einem Ultraschallwandler ausgesendete Messsignal durch das Medium bewegt, denn dieser Teil trägt die Information über die Strömungsgeschwindigkeit des Mediums. Von der Gesamtlaufzeit eines Messsignals, das von einem ersten Ultraschallwandler ausgesendet und von einem zweiten Ultraschallwandler erfasst wird, muss also die Verzögerungszeit t_{d}, in der sich das Messsignal durch eine Ultraschallwandlerhalteanordnung, sofern der Ultraschallwandler auf einer Ultraschallwandlerhalteanordnung angeordnet ist, und/oder durch die Messrohrwand bewegt, abgezogen werden.

In aus dem Stand der Technik bekannten Ultraschallalldurchflussmessgeräten geht diese Verzögerungszeit t_{d} häufig als Konstante in die Berechnung der Geschwindigkeit des Mediums ein. Tatsächlich ist die Verzögerungszeit t_{d} aufgrund von schwankenden Prozessbedingungen nicht konstant. Schwankungen der Schallgeschwindigkeiten der Ultraschallwandlerhalteanordnung und/oder der Messrohrwand und/oder des Mediums, die beispielsweise auf Temperaturänderung zurückgeführt werden können, haben zur Folge, dass sich der Verlauf des Messpfades ändert. Aufgrund des Snelliusschen Brechungsgesetzes ändert sich beim Übergang zweier Medien der Einkoppelwinkel eines Messsignals, das von dem ersten Medium in das zweite Medium eintritt, gemäß: $\frac{sin \left({β}_{1}\right)}{{c}_{1}} = \frac{sin \left({β}_{2}\right)}{{c}_{2}}$
wobei β₁ der Einfallswinkel gegen das Lot auf die Grenzfläche im ersten Medium ist,
wobei *c*₁ die Schallgeschwindigkeit im ersten Medium ist,
wobei β₂ der Brechungswinkel gegen das Lot auf die Grenzfläche im zweiten Medium ist und
wobei *c*₂ die Schallgeschwindigkeit des zweiten Mediums ist.

Durch eine Änderung des Verlaufs des Messpfads innerhalb der Ultraschallwandlerhalteanordnung und/oder der Messrohrwand ändert sich ebenfalls die Verzögerungszeit t_{d}, wodurch ein Messfehler bei der Auswertung der Gesamtlaufzeit und damit bei der Bestimmung der Strömungsgeschwindigkeit entsteht, wenn dies nicht berücksichtigt wird.

Die Strömungsgeschwindigkeit eines fließenden Mediums wird gemäß folgendem Zusammenhang bestimmt: $v = \frac{{L}_{3}}{2 ⋅ cos \left(θ\right)} ⋅ \frac{{t}_{up} - {t}_{down}}{\left({t}_{up}-{t}_{d}\right) ⋅ \left({t}_{down}-{t}_{d}\right)}$
wobei L₃ dem Messpfadabschnitt im Medium entspricht,
wobei *θ* der Messwinkel des Messsignals in das Medium ist,
wobei tᵤₚ der Laufzeit eines Messsignals, das sich entgegen der Strömungsrichtung entlang des Messspfads ausbreitet, entspricht
wobei t_{down} der Laufzeit eines Messsignals das sich in Strömungsrichtung entlang des Messspfads ausbreitet, entspricht und
wobei t_{d} der Verzögerungszeit entspricht, also der Zeit, in der sich das Messsignal durch die Ultraschallwandlerhalteanordnung und/oder durch die Messrohrwand ausbreitet.

Aus der Druckschrift WO 2023/274557 A ist es bekannt, zur Bestimmung des Durchflusses eines strömenden Mediums mit einem Clamp-on Ultraschalldurchflussmessgerät die Temperaturabhängigkeit der Schallgeschwindigkeit im Bereich zwischen den Ultraschallwandlern und dem Messrohr bzw. dem Medium zu berücksichtigen. Hierzu weist das Messgerät sechs Ultraschallwandler auf, die an dem das Messrohr umgebenden Ultraschallwandlerhalter derart angeordnet sind, dass zwei Ultraschallwandlerpaare zur Aussendung bzw. für den Empfang eines schräg durch das Messrohr verlaufenden Messsignals angeordnet sind und dass ein drittes Ultraschallwandlerpaar derart angeordnet ist, dass ein Messsignal senkrecht zur Strömungsrichtung in das Messrohr gesendet und durch den diametral gegenüberliegenden Wandler erfasst wird. Dabei werden die Schallgschwindigkeit des Ultraschallwandlerhalters bzw. des Mediums sowie sämtliche konstruktive Parameter wie beispielsweise die Messrohrwanddicke durch eine Reflexion an der Grenzfläche zwischen dem Ultraschallwandlerhalter und dem Messrohr bzw. zwischen dem Fluid und dem Messrohr bestimmt. Dies kann jedoch problematisch sein, wenn aufgrund von nur geringen Impedanzunterschieden der Materialien die Reflexion nur schwach ausfällt oder gar nicht messbar ist.

Ausgehend von dem dargelegten Stand der Technik ist es Aufgabe der vorliegenden Erfindung ein Verfahren zum Betreiben eines Ultraschalldurchflussmessgeräts anzugeben, mit dem für viele Anwendungen ein besonders niedriger Messfehler gewährleistet werden kann. Zudem ist es Aufgabe der Erfindung ein Ultraschalldurchflussmessgerät zur Durchführung des erfindungsgemäßen Verfahrens anzugeben.

Gemäß einer ersten Lehre der vorliegenden Erfindung wird die zuvor dargelegte Aufgabe durch ein eingangs beschriebenes Verfahren zum Betreiben eines Ultraschalldurchflussmessgeräts dadurch gelöst, dass
dass das Verfahren die folgenden Schritte umfasst:
- Aussenden des Messsignals durch den ersten Ultraschallwandler bzw. den zweiten Ultraschallwandler, wobei sich das Messsignal entlang des Messpfades ausbreitet,
- Empfangen des Messsignals durch den zweiten Ultraschallwandler bzw. den ersten Ultraschallwandler und Bestimmen der Gesamtlaufzeit tₜₒₜₐₗ, wobei tₜₒₜₐₗ der Gesamtlaufzeit des Messsignals zwischen dem ersten Ultraschallwandler und dem zweiten Ultraschallwandler entspricht,
- Aussenden des ersten Referenzsignals durch den dritten oder einen weiteren Ultraschallwandler,
- Empfangen des ersten Referenzsignals durch den dritten Ultraschallwandler und Bestimmen der Referenzlaufzeit t_{ref}, wobei t_{ref} der Laufzeit des ersten Referenzsignals zwischen dem Ultraschallwandler, der das erste Referenzsignal aussendet, und dem dritten Ultraschallwandler entspricht,
- Bestimmung der Geschwindigkeit v des fließenden Mediums unter Verwendung von bekannten konstruktiven Parametern der Messanordnung, den gemessenen Laufzeiten t_{ref} und tₜₒₜₐₗ und der Schallgeschwindigkeit c₁ der Ultraschallwandlerhalteanordnung.

Erfindungsgemäß wurde erkannt, dass eine Bestimmung der Geschwindigkeit v des fließenden Mediums besonders genau ist, wenn zusätzlich zur Messung der Gesamtlaufzeit tₜₒₜₐₗ eines Messsignals, das sich entlang des Messpfads ausbreitet, wenigstens eine weitere Referenzlaufzeit t_{ref} eines Refenzsignals, das sich durch die Ultraschallwandlerhalteanordnung, die Messrohrwand und das Medium ausbreitet, erfasst wird. Damit werden bei der Bestimmung der Strömungsgeschwindigkeit zwei aktuelle gemessene Werte berücksichtigt, die den aktuellen Zustand der Messanordnung beschreiben.

Mittels der genannten zu berücksichtigenden Eingangsgrößen, im Detail der bekannten konstruktiven Parameter der Messanordnung und der Schallgeschwindigkeit c₁ der Ultraschallwandlerhalteanordnung und den gemessenen Laufzeiten kann die Ausbreitung des Messsignals, insbesondere der aktuelle Verlauf des Messpfades und insofern die Verzögerungszeit t_{d} des Messsignals, besonders genau bestimmt werden.

Unter Berücksichtigung der gemessenen Laufzeiten und weiteren bekannten konstruktiven Parametern der Messanordnung kann insbesondere der aktuelle Verlauf des Messpfades in der Ultraschallwandlerhalteanordnung, der Messrohrwand und dem Medium bestimmt werden.

Unter dem Verlauf des Messpfades wird die geometrische Beschreibung des Messpfades verstanden. Die Bestimmung des Verlaufs des Messpfades umfasst zumindest die Bestimmung der Länge der einzelnen Messpfadabschnitte durch die unterschiedlichen Materialien. Insbesondere umfasst die Bestimmung des Verlaufs auch die Bestimmung des Messwinkels θ, der im Rahmen der Bestimmung der Strömungsgeschwindigkeit des fließenden Mediums relevant ist.

Aus dem Verlauf des Messpfades kann die Verzögerungszeit t_{d}, die das Messsignal benötigt, um die Ultraschallwandlerhalteanordnung und die Messrohrwand zu durchlaufen, bestimmt werden. Diese aktuelle Verzögerungszeit kann bei der Bestimmung der Strömungsgeschwindigkeit vorteilhaft berücksichtigt werden, sodass die Bestimmung der Laufzeiten durch das Medium der in und entgegen der Strömungsrichtung ausgesendeten Messsignale eine besonders hohe Genauigkeit aufweist.

Dieses Verfahren ist insbesondere vorteilhaft, wenn die Verzögerungszeit t_{d} in der Größenordnung der Laufzeit des Messsignals durch das Medium liegt. Insbesondere bei kleinen Dimensionen ist es auch möglich, dass die Verzögerungszeit t_{d} größer ist als die Laufzeit des Messsignals durch das Medium. In diesen Anordnungen kann der Fehler bei der Bestimmung der Laufzeit durch das Medium und insofern bei der Bestimmung der Strömungsgeschwindigkeit sehr schnell sehr groß werden.

Zudem kann das erfindungsgemäße Verfahren sowohl in Messanordnungen eingesetzt werden, in denen die akustische Impedanz des Messrohrs sich stark unterscheidet von der akustischen Impedanz des Mediums, sodass ausreichend starke Reflexionen gewährleistet werden können, aber auch in Messanordnungen, in denen die akustische Impedanz des Messrohrs einen ähnlichen Wert aufweist wie die akustische Impedanz des Mediums. Eine stark unterschiedliche Impedanz liegt beispielsweise dann vor, wenn das Messrohr aus Metall besteht, ein nur geringer Impedanzunterschied liegt vor, wenn das Messrohr beispielsweise aus Kunststoff besteht.

In erfindungsgemäßen Messanordnungen durchläuft das Messsignal, sowie auch das erste Referenzsignal, drei Materialien, nämlich die Ultraschallwandlerhalteanordnung, die Messrohrwand und das Medium.

Gemäß einer Ausgestaltung des Verfahrens wird für jedes Material ein Parameter definiert, der den Verlauf des Messpfades in diesem Material bestimmt. Gemäß dieser Ausgestaltung umfasst das Verfahren zur Bestimmung der Geschwindigkeit v des fließenden Mediums folgende Schritte:
- Bestimmung von drei unbekannten Parametern unter Verwendung der bekannten konstruktiven Parameter der Messanordnung, den gemessenen Laufzeiten t_{ref} und tₜₒₜₐₗ und der Schallgeschwindigkeit c₁ der Ultraschallwandlerhalteanordnung, wobei jeweils ein unbekannter Parameter den Verlauf des Messpfads in einem der drei Materialien bestimmt, insbesondere wobei die unbekannten Parameter geometrische Parameter, vorzugsweise Längen oder Winkel, sind,
- Bestimmung des Verlaufs des Messpfades in der Ultraschallwandlerhalteanordnung, in der Messrohrwand und im Medium und Bestimmung der Verzögerungszeit t_{d} des Messsignals, wobei die Verzögerungszeit t_{d} der Laufzeit des Messignals durch die Ultraschallwandlerhalteanordnung und durch die Messrohrwand entspricht, und
- Bestimmung der Geschwindigkeit v des fließenden Mediums unter Berücksichtigung der aktuellen Verzögerungszeit t_{d}.

Gemäß einer vorteilhaften Ausgestaltung wird die Geschwindigkeit v des strömenden Mediums mit einer trainierten künstlichen Intelligenz, insbesondere einem trainierten künstlichen neuronalen Netzwerk, ermittelt, wobei die künstliche Intelligenz als Eingangsgrößen die konstruktiven Parameter, die gemessenen Laufzeiten t_{ref} und tₜₒₜₐₗ und die Schallgeschwindigkeit c₁ der Ultraschallwandlerhalteanordnung erhält und wobei die künstliche Intelligenz als Ausgangsgröße zumindest die Geschwindigkeit v des fließenden Mediums liefert. Hierzu weist die Steuer- und Auswerteeinheit eine künstliche Intelligenz auf.

Besonders vorteilhaft kann die künstliche Intelligenz mit Daten, die mittels eines der nachfolgend beschriebenen Verfahren erhalten oder auch simuliert werden, trainiert werden.

Insbesondere bestimmt die künstliche Intelligenz implizit oder explizit aus den Eingabegrößen einen Parameter, der mit der aktuellen Verzögerungszeit t_{d} korreliert oder der Verzögerungszeit t_{d} entspricht. Optional kann die künstliche Intelligenz die aktuelle Verzögerungszeit t_{d} und/oder die Gesamtweglänge L des Messpfades und/oder die Weglänge L₁ durch die Ultraschallwandlerhalteanordnung und/oder die Weglänge L₂ durch die Messrohrwand und/oder die Weglänge L₃ durch das Medium ausgeben.

Gemäß einer nächsten Ausgestaltung umfasst das Verfahren zur Ermittlung der unbekannten Parameter die folgenden Schritte:
- Erstellung eines Gleichungssystems mit drei Gleichungen,
   wobei die erste Gleichung einen Zusammenhang zwischen der Gesamtlaufzeit tₜₒₜₐₗ des Messsignals und den individuellen Laufzeiten des Messsignals über den Messpfad durch die Ultraschallwandlerhalteanordnung, die Messrohrwand und das Medium unter Berücksichtigung der konstruktiven Parameter beschreibt, wobei die zweite Gleichung einen Zusammenhang zwischen der Referenzlaufzeit t_{ref} und den individuellen Laufzeiten des Referenzsignals über den Referenzpfad durch die Ultraschallwandlerhalteanordnung, die Messrohrwand und das Medium unter Berücksichtigung der konstruktiven Parameter beschreibt und wobei die dritte Gleichung eine geometrische Beziehung zwischen dem Abstand des ersten Ultraschallwandlers und des zweiten Ultraschallwandlers und drei geometrischen Parametern beschreibt, wobei ein geometrischer Parameter den Verlauf des Messpfads in der Ultraschallwandlerhalteanordnung beschreibt, wobei ein geometrischer Parameter den Verlauf des Messpfads in der Messrohrwand beschreibt und wobei ein geometrischer Parameter den Verlauf des Messpfads im Medium beschreibt,
   wobei das Gleichungssystem höchstens drei unbekannte Parameter enthält, wobei jeweils ein unbekannter Parameter den Verlauf des Messpfads in einem der drei Materialien bestimmt, insbesondere wobei die unbekannten Parameter geometrische Parameter, vorzugsweise Längen oder Winkel, sind,
- Lösen des Gleichungssystems und Bestimmen der unbekannten Parameter.

Gemäß einer Ausgestaltung sind die geometrischen Parameter der dritten Gleichung die zu bestimmenden unbekannten Parameter.

Gemäß einer Ausgestaltung sind der erste Ultraschallwandler und der zweite Ultraschallwandler in einem Abstand 2A zueinander angeordnet. Die dritte Gleichung beschreibt gemäß dieser Ausgestaltung den Zusammenhang zwischen dem halben Abstand A des ersten und des zweiten Ultraschallwandlers und den drei Parametern A₁, A₂ und A₃, wobei A₁ dem Anteil des Messpfades in der Ultraschallwandlerhalteanordnung in Verbindungsrichtung, also in axialer Richtung bezogen auf die Messrohrlängsachse, des ersten Ultraschallwandlers und des zweiten Ultraschallwandlers entspricht, wobei A₂ dem Anteil des Messpfades in der Messrohrwand in Verbindungsrichtung des ersten Ultraschallwandlers und des zweiten Ultraschallwandlers entspricht und wobei A₃ dem Anteil des Messpfades im Medium in Verbindungsrichtung des ersten Ultraschallwandlers und des zweiten Ultraschallwandlers entspricht.

Besonders bevorzugt ist der Messpfad symmetrisch ausgebildet. Dabei definiert der halbe Abstand A des ersten und des zweiten Ultraschallwandlers in axialer Richtung des Messrohrs betrachtet den Symmetriepunkt. Die Beschreibung des Messpfades vor dem Symmetriepunkt entspricht insofern der Beschreibung des Messspfades hinter dem Symmetriepunkt in Verbindungsrichtung des ersten und des zweiten Ultraschallwandlers betrachtet. Insofern kann bei der Bestimmung der nachfolgend definierten Weglängen L₁ durch die Ultraschallwandlerhalteanordnung, L₂ durch die Messrohrwand und L₃ durch das Medium der vor dem Symmetriepunkt beschriebene Pfad verdoppelt werden. Die Längen A₁, A₂ und A₃ bestimmen die Weglänge eines einmaligen Durchtritts des Messsignals durch ein Material.

Beträgt der Abstand der Ultraschallwandler zueinander 2A, so durchläuft das Messignal bis zu einem Abstand A, alle drei Materialien. In Abhängigkeit der genauen Messanordnung, im Detail der Form des Messpfades, durchläuft das Messsignal im Bereich A jedes Material zumindest einmal.

Durchläuft das Messsignal jedes Material genau einmal, so gilt als dritte Gleichung: $A = {A}_{1} + {A}_{2} + {A}_{3}$
wobei A₁ dem Anteil des Messpfades in der Ultraschallwandlerhalteanordnung in Verbindungsrichtung, also in axialer Richtung bezogen auf die Messrohrlängsachse, des ersten Ultraschallwandlers und des zweiten Ultraschallwandlers entspricht,
wobei A₂ dem Anteil des Messpfades in der Messrohrwand in Verbindungsrichtung des ersten Ultraschallwandlers und des zweiten Ultraschallwandlers entspricht und
wobei A₃ dem Anteil des Messpfades im Medium in Verbindungsrichtung des ersten Ultraschallwandlers und des zweiten Ultraschallwandlers entspricht.

Ist beispielsweise der Messpfad V-förmig ausgebildet und wird das Messsignal nach dem Durchlauf durch das Medium an der äußeren Messrohrwand reflektiert, so durchläuft das Messsignal im Bereich A die Messrohrwand zweimal. Dann gilt: $A = {A}_{1} + 2 ⋅ {A}_{2} + {A}_{3}$
wobei A₁ dem Anteil des Messpfades in der Ultraschallwandlerhalteanordnung in Verbindungsrichtung, also in axialer Richtung bezogen auf die Messrohrlängsachse, des ersten Ultraschallwandlers und des zweiten Ultraschallwandlers entspricht,
wobei A₂ dem Anteil des Messpfades in der Messrohrwand in Verbindungsrichtung des ersten Ultraschallwandlers und des zweiten Ultraschallwandlers entspricht und
wobei A₃ dem Anteil des Messpfades im Medium in Verbindungsrichtung des ersten Ultraschallwandlers und des zweiten Ultraschallwandlers entspricht.

Gemäß einer Ausgestaltung entsprechen die Parameter A₁, A₂ und A₃ den unbekannten Variablen des Gleichungssystems.

Alternativ können die unbekannten Parameter auch ein Winkel sein, die den Verlauf der Messpfadabschnitte definieren.

Gemäß einer besonders vorteilhaften Ausgestaltung berücksichtigen die erste Gleichung und/oder die zweite Gleichung des Gleichungssystems als konstruktive Parameter den Abstand B₁ des Abstrahlelementes des ersten Ultraschallwandlers zum Messrohr und/oder den Abstand B₂ des zweiten Ultraschallwandlers zum Messrohr und/oder den Abstand B₃ des Abstrahlelementes des dritten Ultraschallwandlers zum Messrohr und/oder die Dicke T der Messrohrwand und/oder den inneren Radius R des Messrohrs.

Gemäß einer Ausgestaltung des Verfahrens sind die konstruktiven Parameter beispielsweise aus Spezifikationen des Messgeräts bekannt. Gemäß einer nächsten Ausgestaltung des Verfahrens wird die Dicke T der Messrohrwand und/oder der innere Radius R des Messrohrs durch eine Laufzeitmessung von einer Reflexion des ersten Referenzsignals gemessen.

Grundsätzlich können der Abstand B₁ des Abstrahlelementes des ersten Ultraschallwandlers zum Messrohr und der Abstand B₂ des zweiten Ultraschallwandlers zum Messrohr und der Abstand B₃ des Abstrahlelementes des dritten Ultraschallwandlers zum Messrohr gleich groß sein. Alternativ können sich die Werte von B₁, B₂ und B₃ auch zumindest teilweise unterscheiden.

Gemäß einer bevorzugten Ausgestaltung lässt sich der Messpfad L in Messpfadabschnitte L₁, L₂ und L₃ unterteilen, wobei der Messpfadabschnitt L₁ in der Ultraschallwandlerhalteanordnung verläuft, wobei der Messpfadabschnitt L₂ in der Messrohrwand verläuft und wobei der Messpfadabschnitt L₃ im Medium verläuft. Jeder Messpfadabschnitt L₁, L₂, L₃ umfasst vorzugsweise wenigstens eine Hypotenuse eines rechtwinkligen Dreiecks. Dabei stehen aufeinanderfolgende Messpfadabschnitte in unterschiedlichen Materialien über das Snelliussche Brechungsgesetz miteinander in Verbindung.

Die Summe der von dem Messsignal durchlaufenen Messpfadabschnitte entspricht der Gesamtweglänge L des Messpfades.

Es gilt also $L = {L}_{1} + {L}_{2} + {L}_{3} .$

Gemäß einer weiteren bevorzugten Ausgestaltung durchläuft der erste Referenzpfad senkrecht zur Strömungsrichtung des Mediums die Ultraschallwandlerhalteanordnung, die Messrohrwand und das Medium, sodass keine Brechung an den Materialübergängen stattfindet. Diese Ausgestaltung weist den Vorteil auf, dass bei der Aufstellung des Gleichungssystems, insbesondere der zweiten Gleichung, kein weiterer unbekannter geometrischer Parameter dazu kommt. Vielmehr können den Materialübergang charakterisierende Zusammenhänge, sowohl für die erste Gleichung als auch für die zweite Gleichung genutzt werden, um insgesamt die Anzahl an unbekannten Parametern des Gleichungssystems zu reduzieren.

Insbesondere werden in der ersten Gleichung die Laufzeiten des Messsignals entlang des Messpfads durch die Messrohrwand und durch das Medium in Abhängigkeit von der Schallgeschwindigkeit c₁ der Ultraschallwandlerhalteanordnung ausgedrückt und/oder in der zweiten Gleichung werden die Laufzeiten des Messsignals entlang des Messpfads durch die Messrohrwand und durch das Medium in Abhängigkeit von der Schallgeschwindigkeit c₁ der Ultraschallwandlerhalteanordnung ausgedrückt.

Die Schallgeschwindigkeit c₁ kann als gegeben und konstant erachtet werden. Alternativ kann die Schallgeschwindigkeit auch, wie nachfolgend noch beschrieben wird, über einen zweiten Referenzpfad gemessen werden.

Gemäß einer nächsten vorteilhaften Ausgestaltung werden mit der Lösung des Gleichungssystems die Gesamtweglänge L des Messpfads und/oder die Länge der einzelnen Messpfadabschnitte L₁, L₂ und L₃ und/oder der Brechungswinkel β₂ des Messsignals beim Übergang in die Messrohrwand und/oder der Brechungswinkel β₃ des Messsignals beim Übergang in das Medium und/oder die Schallgeschwindigkeit c₂ der Messrohrwand und/oder die Schallgeschwindigkeit c₃ des Mediums bestimmt.

Gemäß einer nächsten Ausgestaltung ist ein zweiter Referenzpfad vorhanden, wobei der zweite Referenzpfad nur innerhalb des Materials der Ultraschallwandlerhalteanordnung verläuft, und wobei die Schallgeschwindigkeit c₁ der Ultraschallwandlerhalteanordnung durch eine Laufzeitmessung eines zweiten Referenzsignals, dass sich entlang des zweiten Referenzpfades ausbreitet, bestimmt wird.

Beispielsweise kann der zweite Referenzpfad in der Ultraschallwandlerhalteanordnung verlaufen. Alternativ kann ein Aufsatz vorhanden sein, in dem der zweite Referenzpfad realisiert ist. Relevant ist hier, dass der Aufsatz aus dem Material der Ultraschallwandlerhalteanordnung besteht.

Besonders bevorzugt wird das Gleichungssystem unter Beachtung von Randbedingungen der zu bestimmenden unbekannten Parameter numerisch gelöst. Das aufgestellte Gleichungssystem ist insbesondere ein nicht lineares Gleichungssystem, das mehrere Lösungen aufweisen kann.

Sind die unbekannten Parameter die geometrischen Parameter A₁, A₂ und A₃ oder Winkel, so können gibt es einen Wertebereich, der für die Messanordung sinnvoll bzw. möglich ist. Nicht realisierbare Werte, werden nicht als mögliche Lösungen des Gleichungssystem angesehen.

Die Abstrahlelemente der Ultraschallwandler sind gemäß einer bevorzugten Ausgestaltung Piezoelemente. Dabei sind die Piezoelemente vorzugsweise derart dimensioniert, dass der Öffnungswinkel des ausgesendeten Signals derart dimensioniert ist, dass sich möglichst viel Energie entlang des Messpfads bzw. des Referenzpfades ausbreitet. Grundsätzlich wird im Rahmen der vorliegenden Erfindung, insbesondere bei der Aufstellung und der Lösung des Gleichungssystems, das Messsignal und das erste Referenzsignal und, sofern vorhanden, das zweite Referenzsignal als einzelner Pfad angesehen. Diese Annahme ist gerechtfertigt, da durch diese Betrachtung das Messsignal auf den kürzesten Pfad mit der kürzesten Laufzeit reduziert wird.

Sind die Abstrahlelemente der Ultraschallwandler auf einer schrägen Fläche der Ultraschallwandlerhalteanordnung angeordnet, so ist, sofern c₁<c₂ erfüllt ist, der Winkel des Messsignals zum Lot auf die Messrohrwand und damit der Winkel β₁ mit dem das Messignal auf die Messrohrwand trifft, kleiner als der kritische Winkel, bei dem gemäß dem Snelliusschen Brechungsgesetz keine Transmission mehr vorhanden ist. Diese Bedingung limitiert gleichzeitig den Öffnungswinkel des Messignals. Vorzugsweise ist der Öffnungswinkel derart dimensioniert, das möglichst viel Energie des Messignals sich entlang des Messpfades ausbreitet. Die Beschränkung des Öffnungswinkels des Messignals beschränkt ebenfalls die möglichen Werte für A₁ und A₂.

Das erfindungsgemäße Verfahren weist den Vorteil auf, dass durch die Berücksichtigung der Auswirkung von variierenden Prozessbedingungen, insbesondere variierende Schallgeschwindigkeiten des Mediums und/oder der Messrohrwand und der Ultraschallwandlerhalteanordnung auf den Verlauf des Messpfads und insofern auf die Verzögerungszeit der Offset- Fehler bei der Bestimmung der Strömungsgeschwindigkeit nahezu vermieden werden kann.

Gemäß einer zweiten Lehre der vorliegenden Erfindung wird die eingangs genannte Aufgabe durch ein eingangs beschriebenes Ultraschalldurchflussmessgerät dadurch gelöst, dass die Steuer- und Auswerteeinheit zur Durchführung eines der zuvor beschriebenen Verfahren ausgebildet ist.

Hinsichtlich der Ausgestaltung des Ultraschalldurchflussmessgeräts wird auf sämtlich vorherigen und nachfolgenden Ausführungen verwiesen.

Gemäß einer besonders bevorzugten Ausgestaltung ist der dritte Ultraschallwandler derart an der Ultraschallwandlerhalteanordnung angeordnet, dass der erste Referenzpfad senkrecht zur Fließrichtung des strömenden Mediums verläuft. Besonders bevorzugt ist das Piezoelement des dritten Ultraschallwandlers senkrecht zur Strömungsrichtung ausgerichtet und auf der Ultraschallwandlerhalteanordnung angeordnet.

Der dritte Ultraschallwandler kann gemäß einer Ausgestaltung das erste Referenzsignal sowohl aussenden als auch das reflektierte Referenzsignal empfangen. Gemäß einer nächsten Ausgestaltung ist ein vierter Ultraschallwandler vorhanden. Gemäß dieser Ausgestaltung verläuft der erste Referenzpfad zwischen dem dritten Ultraschallwandler und dem vierten Ultraschallwandler. Dabei kann der dritte Ultraschallwandler das erste Referenzsignal aussenden, wobei der vierte Ultraschallwandler das erste Referenzsignal empfängt und umgekehrt.

Gemäß einer weiteren bevorzugten Ausgestaltung sind die Ultraschallwandler derart angeordnet, dass ein zweiter Referenzpfad, über den sich ein zweites Referenzsignal ausbreitet, vorhanden ist, wobei der zweite Referenzpfad nur innerhalb des Materials der Ultraschallwandlerhalteanordnung verläuft. Beispielsweise kann der zweite Referenzpfad zwischen dem ersten Ultraschallwandler und dem dritten Ultraschallwandler ausgebildet sein. Alternativ kann der zweite Referenzpfad zwischen dem dritten Ultraschallwandler und dem zweiten Ultraschallwandler ausgebildet sein. Gemäß einer nächsten Ausgestaltung ist der zweite Referenzpfad zwischen dem ersten Ultraschallwandler und dem zweiten Ultraschallwandler ausgebildet.

Der zweite Referenzpfad kann auch als Teil des ersten Referenzpfades ausgebildet sein. Gemäß dieser Ausgestaltung ist der dritte Ultraschallwandler derart angeordnet, dass er das erste Referenzsignal senkrecht zur Strömungsrichtung des Mediums durch die Ultraschallwandlerhalteanordnung und die Messrohrwand in das Medium sendet. Das zweite Referenzsignal entspricht der Reflexion des ersten Referenzsignals am Übergang zwischen der Ultraschallwandlerhalteanordnung und der Messrohrwand.

Gemäß einer weiteren Ausgestaltung ist ein Aufsatz vorhanden, der auf oder an dem dritten Ultraschallwandler angeordnet ist, wobei der dritte Ultraschallwandler zumindest zeitweise ein Signal in den Aufsatz sendet und das Reflexionssignal erfasst. Dabei besteht der Aufsatz aus dem Material der Ultraschallwandlerhalteanordnung.

Besonders bevorzugt ist in der Ultraschallwandlerhalteanordnung ein Reflexionselement zur Reflexion des zweiten Referenzsignals ausgebildet. Beispielsweise kann das Reflexionselement als Nut in der Ultraschallwandlerhalteanordnung ausgebildet sein. Gemäß einer nächsten Ausgestaltung ist das Reflexionselement als Materialeinsatz, wobei der Materialeinsatz ein anderes Material als die Ultraschallwandlerhalteanordnung aufweist, ausgebildet.

Gemäß einer nächsten Ausgestaltung sind die Ultraschallwandler in Fließrichtung des Mediums betrachtet fest, also nicht verschiebbar, auf der wenigstens einen Ultraschallwandlerhalteanordnung angeordnet. Durch die erfindungsgemäße Berücksichtigung der Variation der Schallgeschwindigkeiten und der sich daraus ergebenden Messpfadänderung sowie der Änderung der Verzögerungszeit ist es nicht notwendig, die Ultraschallwandler neu auszurichtung oder neu zu kalibrieren, wenn sich die Prozessbedingungen ändern.

Gemäß einer Ausgestaltung umfasst die Ultraschallwandlerhalteanordnung genau einen Ultraschallwandlerhalter, auf dem sowohl der erste, der zweite und der dritte Ultraschallwandler angeordnet sind. Insbesondere weist die Ultraschallwandlerhalteanordnung wenigstens zwei keilförmige Bereich auf, wobei der erste Ultraschallwandler und der zweite Ultraschallwandler jeweils auf der Schräge eines keilförmigen Bereichs angeordnet sind, sodass die Ultraschallwandler unter einem Winkel das Messignal in Richtung des Mediums bzw. des Messrohrs aussenden.

Gemäß einer weiteren Ausgestaltung umfasst die Ultraschallwandlerhalteanordnung wenigstens zwei Ultraschallwandlerhalter, wobei die wenigstens zwei Ultraschallwandlerhalter zumindest bereichsweise keilförmig ausgebildet sind, wobei der erste Ultraschallwandler auf einem ersten Ultraschallwandlerhalter angeordnet ist und wobei der zweite Ultraschallwandler auf einem zweiten Ultraschallwandlerhalter angeordnet ist. Vorzugsweise ist der dritte Ultraschallwandler gemäß dieser Ausgestaltung auf dem ersten Ultraschallwandlerhalter oder auf dem zweiten Ultraschallwandlerhalter angeordnet.

Gemäß einer nächsten Ausgestaltung weist die Ultraschallwandlerhalteanordnung drei Ultraschallwandlerhalter auf, wobei der erste Ultraschallwandler auf dem ersten Ultraschallwandlerhalter angeordnet ist, wobei der zweite Ultraschallwandler auf dem zweiten Ultraschallwandlerhalter angeordnet ist und wobei der dritte Ultraschallwandler auf dem dritten Ultraschallwandlerhalter angeordnet ist.

Gemäß einer nächsten Ausgestaltung weist das Ultraschalldurchflussmessgerät höchstens drei Ultraschallwandler oder höchstens vier Ultraschallwandler auf. Die Bestimmung aktuellen Verzögerungszeit kann demnach besonders effizient mit einem besonders einfachen Aufbau durchgeführt werden.

Es gibt nun eine Vielzahl von Möglichkeiten das erfindungsgemäße Verfahren und das erfindungsgemäße Ultraschalldurchflussmessgerät auszugestalten und weiterzubilden. Hierzu wird verwiesen auf die den unabhängigen Patentansprüchen nachgeordneten Patentansprüche sowie auf die nachfolgend beschriebenen Ausführungsbeispiele in Verbindung mit der Zeichnung.

In der Zeichnung zeigen
- Fig. 1: ein Ausführungsbeispiel eines erfindungsgemäßen Ultraschalldurchflussmessgeräts,
- Fig. 2: ein weiteres Ausführungsbeispiel eines Ultraschalldurchflussmesssgeräts,
- Fig. 3: ein weiteres Ausführungsbeispiel eines Ultraschalldurchflussmessgeräts,
- Fig. 4: ein weiteres Ausführungsbeispiel eines Ultraschalldurchflussmessgeräts,
- Fig. 5: ein weiteres Ausführungsbeispiel eines Ultrsachalldurchflussmessgeräts,
- Fig. 6: ein weiteres Ausführungsbeispiel eines Ultraschalldurchflussmessgeräts,
- Fig. 7: ein weiteres Ausführungsbeispiel eines Ultraschalldurchflussmessgeräts,
- Fig. 8: ein Ausführungsbeispiel eines erfindungsgemäßen Verfahrens,
- Fig. 9: einen Vergleich zwischen der traditionellen Bestimmung der Strömungsgeschwindigkeit v und der Bestimmung der Strömungsgeschwindigkeit gemäß dem erfindungsgemäßen Verfahren und
- Fig. 10: ein weiteres Ausführungsbeispiel eines erfindungsgemäßen Verfahrens.

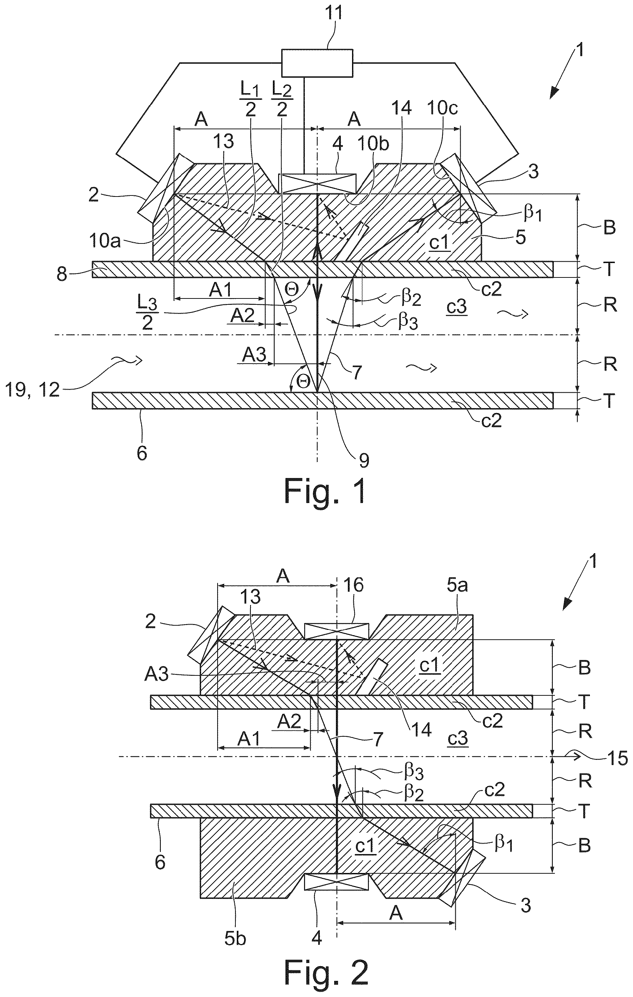

Fig. 1 zeigt ein erstes Ausführungsbeispiel eines Ultraschalldurchflussmessgeräts 1. Das Ultraschalldurchflussmessgerät 1 weist einen ersten Ultraschallwandler 2 und einen zweiten Ultraschallwandler 3 auf, die an einer Ultraschallwandlerhalteanordnung 5 angeordnet sind. Die Ultraschallwandlerhalteanordnung 5 umfasst im dargestellten Ausführungsbeispiel einen Ultraschallwandlerhalter, wobei der Ultraschallwandlerhalter zwei keilförmige Bereiche aufweist und wobei der erste Ultraschallwandler 2 und der zweite Ultraschallwandler 3 jeweils auf der Schräge eines Keils angeordnet ist.

Die Ultraschallwandlerhalteanordnung 5 ist an einem Messrohr 6 angeordnet, wobei im Betrieb ein Medium 12 durch das Messrohr fließt. Der erste und der zweite Ultraschallwandler 2, 3 sind derart an der Ultraschallwandlerhalteanordnung 5 angeordnet, dass sie zwischen sich einen symmetrischen V-förmigen Messpfad 7 durch die Ultraschallwandlerhalteanordnung 5, die Messrohrwand 8 und das im Messrohr 6 vorhandene Medium aufspannen.

Der Übersichtlichkeit wegen sind in der ersten Hälfte des Messpfades die Längen A₁, A₂ und A₃ dargestellt, in der zweiten Hälfte des Messpfades sind die Winkel β₁, β₂ und β₃ dargestellt. Aufgrund der symmetrischen Ausgestaltung sind die Längen A1 bis A3 ebenfalls in der zweiten Hälfte de Messpfades vorhanden und die Winkel β₁, β₂ und β₃ sind ebenfalls in der ersten Hälfte dem Messpfades vorhanden. Ebenfalls dargestellt ist der Messwinkel 0, der zur Bestimmung der Strömungsgeschwindigkeit relevant ist.

Zudem ist ein dritter Ultraschallwandler 4 vorhanden, wobei der dritte Ultraschallwandler 4 ebenfalls an der Ultraschallwandlerhalteanordnung 5 angeordnet ist, wobei der dritte Ultraschallwandler 4 zwischen dem ersten Ultraschallwandler 2 und dem zweiten Ultraschallwandler 3 angeordnet ist. Weiterhin ist der dritte Ultraschallwandler 4 derart an der Ultraschallwandlerhalteanordnung 5 angeordnet, dass er einen ersten Referenzpfad 9 definiert, der senkrecht zur Fließrichtung 19 des Mediums 12 durch die Ultraschallwandlerhalteanordnung 5, die Messrohrwand 8 und das Medium verläuft. Im dargestellten Ausführungsbeispiel weisen die Abstrahlelemente 10a, 10b, 10c des ersten Ultraschallwandlers 2, des zweiten Ultraschallwandlers 3 und des dritten Ultraschallwandlers 4 den gleichen Abstand B zum Messrohr 6 auf.

Weiterhin weist das Ultraschalldurchflussmessgerät 1 eine Steuer- und Auswerteeinheit 11 zur Ansteuerung der Ultraschallwandler 2, 3, 4 und zur Auswertung der von den Ultraschallwandlern 2, 3, 4 erfassten Signale auf.

Zur Bestimmung der Strömungsgeschwindigkeit v des Mediums wird die Laufzeit eines ersten Messsignals, das sich zwischen dem ersten Ultraschallwandler 2 und dem zweiten Ultraschallwandler 3 entlang des Messpfads 7 in Strömungsrichtung 19 ausbreitet und die Laufzeit eines zweiten Messsignals, das sich zwischen dem zweiten Ultraschallwandler 3 und dem ersten Ultraschallwandler 2 entgegen der Strömungsrichtung 19 ausbreitet, gemessen. Aus dem Laufzeitunterschied wird die Strömungsgeschwindigkeit v bestimmt.

Dabei trägt jedoch nur der Teil des Messignals eine Information über die Strömungsgeschwindigkeit v des Mediums 12, der das Medium 12 passiert. Bei der Bestimmung der Laufzeit des Messignals wird also die Laufzeit, in der das Messignal die Ultraschallwandlerhalteanordnung 5 und die Messrohrwand 8 passiert, als Verzögerungszeit t_{d} von der Gesamtlaufzeit abgezogen.

Dabei ist bei variierenden Prozessbedingungen, beispielsweise bei der Variation der Mediumtemperatur oder der Umgebungstemperatur die Verzögerungszeit t_{d} nicht konstant.

Mit der dargestellten Anordnung lässt sich in vorteilhafter Weise unter Kenntnis von konstruktiven Randbedingungen die aktuellen Verzögerungszeit t_{d} der Messanordnung bestimmen.

Hierzu wird ein Gleichungssystem mit drei Gleichungen und drei unbekannten Parametern aufgestellt, wobei jeweils ein unbekannter Parameter den Verlauf des Messpfades 7 in einem der Materialien der Ultraschallwandlerhalteanordnung 5, der Messohrwand 8 und des Medium 12 bestimmt.

Die erste Gleichung beschreibt die Gesamtlaufzeit tₜₒₜₐₗ eines Messignals, das sich zwischen dem ersten Ultraschallwandler 2 und dem zweiten Ultraschallwandler 3 entlang des Messpfads 7 ausbreitet. Für diese Laufzeit gilt: ${t}_{v} = \frac{2 ⋅ \sqrt{{{A}_{1}}^{2} + {B}^{2}}}{{c}_{1}} + \frac{2 ⋅ {A}_{1} ⋅ \left({{A}_{2}}^{2}+{T}^{2}\right)}{{c}_{1} ⋅ {A}_{2} ⋅ \sqrt{{{A}_{1}}^{2} + {B}^{2}}} + \frac{2 ⋅ {A}_{1} ⋅ \left({{A}_{3}}^{2}+4⋅{R}^{2}\right)}{{c}_{1} ⋅ {A}_{3} ⋅ \sqrt{\left({{A}_{1}}^{2}+{B}^{2}\right)}}$ (1)

Dabei ist A₁ der Bereich in axialer Richtung betrachtet, in dem das Messignal durch die Ultraschallwandlerhalteanordnung 5 läuft, A₂ der Bereich in axialer Richtung betrachtet, in dem das Messsignal durch die Messrohrwand 8 läuft und A₃ der Bereich in axialer Richtung betrachtet, in dem das Messsignal durch das Medium 12 läuft.

B, R und T sind konstruktive Parameter: B entspricht dem Abstand der Abstrahlelemente 10a, 10b, 10c der Ultraschallwandler 2, 3, 4 zum Messrohr 6. Dieser ist im vorliegenden Ausführungsbeispiel für alle drei Ultraschallwandler 2, 3, 4 identisch. R ist der innere Radius des Messrohrs 6 und T ist die Dicke der Messrohrwand 8. Diese Parameter sind in der obigen Gleichung bekannt. Beispielsweise können sie durch Messung oder Schätzung oder durch angegebene Spezifikationen des Messgeräts erhalten werden.

Weiterhin ist c₁ die Schallgeschwindigkeit der Ultraschallwandlerhalteranordnung 5. Diese Schallgeschwindigkeit ist ebenfalls bekannt. Im dargestellten Ausführungsbeispiel kann die Schallgeschwindigkeit c₁ gemessen werden. Hierzu ist ein zweiter Referenzpfad 13 zwischen dem ersten Ultraschallwandler 2 und dem dritten Ultraschallwandler 4 vorhanden, der innerhalb der Ultraschallwandlerhalteanordnung 5 verläuft, wobei ein von dem ersten Ultraschallwandler 2 ausgesendetes zweites Referenzsignal an einem Reflexionselement 14, das im dargestellten Ausführungsbeispiel als Nut ausgebildet ist, reflektiert wird und von dem dritten Ultraschallwandler 4 empfangen wird.

Die einzelnen Summanden der Gleichung (1) bezeichnen die Laufzeiten durch die einzelnen Materialien. Der erste Summand entspricht der Laufzeit durch die Ultraschallwandlerhalteanordnung 5, der zweite Summand entspricht der Laufzeit die Messrohrwand 8 und der dritte Summand entspricht der Laufzeit durch das Medium.

Durch das Snelliussche Brechungsgesetz an den einzelnen Materialübergängen stehen die einzelnen Summanden miteinander in Beziehung. Im Detail können durch diese Beziehung sowie durch die Annahme, dass der Verlauf des Messpfades 7 in jedem Material der Hypotenuse eines rechtwinkligen Dreiecks entspricht, die Schallgeschwindigkeiten c₂ der Messrohrwand 8 und die Schallgeschwindigkeit c₃ des Mediums 12 wie folgt ausgedrückt werden: ${c}_{2} = \frac{{c}_{1} . {A}_{2} ⋅ \sqrt{\left({{A}_{1}}^{2}+{B}^{2}\right)}}{{A}_{1} ⋅ \sqrt{\left({{A}_{2}}^{2}+{T}^{2}\right)}}$ und ${c}_{3} = \frac{{c}_{1} ⋅ {A}_{3} ⋅ \sqrt{\left({{A}_{1}}^{2}+{B}^{2}\right)}}{{A}_{1} ⋅ \sqrt{\left({{A}_{3}}^{2}+4⋅{R}^{2}\right)}}$

Die zweite Gleichung beschreibt die Gesamtlaufzeit eines Referenzsignals, das von dem dritten Ultraschallwandler 4 ausgesendet wird und sich entlang des ersten Referenzpfades 9 senkrecht zur Strömungsrichtung 12 durch die Ultraschallwandlerhalteanordnung 5, die Messrohrwand 8 und das Medium 12 ausbreitet.

Für diese Laufzeit gilt, wobei die Schallgeschwindigkeit c₂ und c₃ ebenfalls durch die zuvor dargelegten Zusammenhänge ersetzt wurden: ${t}_{⊥} = \frac{2 ⋅ B}{{c}_{1}} + \frac{2 ⋅ T ⋅ {A}_{1} \sqrt{\left({{A}_{2}}^{2}+{T}^{2}\right)}}{{c}_{1} ⋅ {A}_{2} ⋅ \sqrt{\left({{A}_{1}}^{2}+{B}^{2}\right)}} + \frac{4 ⋅ R ⋅ {A}_{1} \sqrt{\left({{A}_{3}}^{2}+4⋅{R}^{2}\right)}}{{c}_{1} ⋅ {A}_{3} ⋅ \sqrt{\left({{A}_{1}}^{2}+{B}^{2}\right)}}$ (2)

Die dritte Gleichung beschreibt einen geometrischen Zusammenhang zwischen dem halben Abstand A des ersten Ultraschallwandlers 2 und des zweiten Ultraschallwandlers 3 und den drei Parametern A₁, A₂ und A₃, wobei A₁ dem Anteil des Messpfades 7 in der Ultraschallwandlerhalteanordnung in Verbindungsrichtung des ersten Ultraschallwandlers 2 und des zweiten Ultraschallwandlers 3 entspricht, wobei A₂ dem Anteil des Messpfades 7 in der Messrohrwand 8 in Verbindungsrichtung des ersten Ultraschallwandlers 2 und des zweiten Ultraschallwandlers 3 entspricht und wobei A₃ dem Anteil des Messpfades 7 im Medium 12 in Verbindungsrichtung des ersten Ultraschallwandlers 2 und des zweiten Ultraschallwandlers 3 entspricht. ${A}_{3} = A - {A}_{1} - {A}_{2}$ (3)

Insgesamt weisen die drei Gleichungen damit drei unbekannte Parameter auf, nämlich A₁, A₂ und A₃.

Dieses Gleichungssystem kann beispielsweise numerisch gelöst werden.

Für die Bestimmung der Lösung gelten für die Parameter A₁ und A₂ Randbedingungen, die sich aus dem generell möglichen Bereich des Winkels β₁ des Messsignals zum Lot auf das Messrohr ergeben. Sofern c1<c2 ist, ist der Winkel β_{1 max} begrenzt durch den kritischen Winkel, nach dem gemäß dem Snelliusschen Brechungsgesetz keine Transmission mehr vorhanden ist.

Ist grundsätzlich der zu erwartende Wertebereich der Schallgeschwindigkeit des Mediums c₃ bekannt, so können die Randbedingungen, insbesondere der minimale Winkel β_{1 min} und der maximale Winkel β_{1 max} mit Hilfe einer geschätzten Schallgeschwindigkeit c₂ des Messrohrs wie folgt bestimmt werden:
Es gilt: ${β}_{crit 1} = asin \left(\frac{{c}_{1}}{{c}_{2 , gesch ä tzt}}\right) \to {β}_{1 max} = {β}_{crit 1} \left(sofern {c}_{1}<{c}_{2 geschätzt}\right)$

Daraus folgt für A₁: ${A}_{1 min} = B ⋅ tan \left({β}_{1 min}\right) ⋅ \left(1-\frac{ε}{100}\right)$ ${A}_{1 max} = B ⋅ tan \left({β}_{1 max}\right) ⋅ \left(1+\frac{ε}{100}\right)$ ${β}_{2 min} = asin \left({c}_{2 gesch ä tzt}⋅sin\left(\frac{{β}_{1 min}}{{c}_{1}}\right)\right)$ ${β}_{2 max} = asin \left({c}_{2 gesch ä tzt}⋅sin\left(\frac{{β}_{1 max}}{{c}_{1}}\right)\right)$ ${β}_{2 max} = {β}_{2 max , m ö glich} \left(sofern {β}_{2 max}\geq {β}_{2 max , m ö glich}\right)$

Für A₂ ergeben sich folgende Randbedingungen: ${A}_{2 min} = T ⋅ tan \left({β}_{2 min}\right) ⋅ \left(1-\frac{ε}{100}\right)$ ${A}_{2 max} = T ⋅ tan \left({β}_{2 max}\right) ⋅ \left(1+\frac{ε}{100}\right)$

In den obigen Gleichungen bezeichnet ε eine mögliche Abweichung der Eingabe der konstruktiven Parameter B, T oder R. *β*_{2*max,möglich*} bezeichnet den maximal möglichen Winkel für β₂.

Aus den Werten für A₁, A₂ und A₃ lassen sich dann die Werte für die Schallgeschwindigkeiten c₂ und c₃ sowie die Weglängen L₁, L₂ und L₃ bestimmen, wobei L₁ die Weglänge durch die Ultraschallwandlerhalteanordnung 5 ist, wobei L₂ die Weglänge durch die Messrohrwand 8 ist und wobei L₃ die Weglänge durch das Medium ist.

Für die Weglängen gilt: ${L}_{1} = 2 ⋅ \sqrt{\left({{A}_{1}}^{2}+{B}^{2}\right)}$ ${L}_{2} = 2 ⋅ \sqrt{\left({{A}_{2}}^{2}+{T}^{2}\right)}$ und ${L}_{3} = 2 ⋅ \sqrt{\left({{A}_{3}}^{2}+4⋅{R}^{2}\right)}$

Basierend auf der Kenntnis der Weglängen L₁ bis L₃ und den Schallgeschwindigkeiten c₁ bis c₃ kann die Laufzeit durch d Ultraschallwandlerhalteanordnung 5 und die Messrohrwand 8 und insofern die aktuelle Verzögerungszeit t_{d} bestimmt werden.

Damit kann bei der Bestimmung der Strömungsgeschwindigkeit gemäß dem folgenden Zusammenhang die aktuelle Verzögerungszeit t_{d} berücksichtigt werden, wodurch der Fehler bei der Bestimmung der Strömungsgeschwindigkeit insgesamt verringert wird. $v = \frac{{L}_{3}}{2 ⋅ cos \left(θ\right)} ⋅ \frac{{t}_{up} - {t}_{down}}{\left({t}_{up}-{t}_{d}\right) ⋅ \left({t}_{down}-{t}_{d}\right)}$

Fig. 2 zeigt ein weiteres Ausführungsbeispiel eines Ultraschalldurchflussmessgeräts 1, das an einem Messrohr 6 angeordnet ist. An dem Messrohr 6 ist eine Ultraschallwandlerhalteanordnung 5 angeordnet, wobei die Ultraschallwandlerhalteanordnung 5 im gezeigten Ausführungsbeispiel zwei Ultraschallwandlerhalter 5a, 5b aufweist. Im dargestellten Ausführungsbeispiel ist ein erster Ultraschallwandlerhalter 5a oberhalb der Messrohrlängsachse 15 angeordnet, ein zweiter Ultraschallwandlerhalter 5b ist unterhalb der Messrohrlängsachse 15 angeordnet.

Dabei weisen der oberhalb der Messrohrlängsachse 15 angeordnete Ultraschallwandlerhalter 5a und der unterhalb der Messrohrlängsachse 15 angeordnete Ultraschallwandlerhalter 5b jeweils eine schräge Fläche auf. Auf der schrägen Fläche des ersten Ultraschallwandlerhalters 5a ist der erste Ultraschallwandler 2 angeordnet. Auf der schrägen Fläche des zweiten Ultraschallwandlerhalters 5b ist der zweite Ultraschallwandler 3 angeordnet. Zwischen dem ersten Ultraschallwandler 2 und dem zweite Ultraschallwandler 3 wird der Messpfad 7 aufgespannt, den ein Messignal durchläuft, das sich zwischen dem ersten Ultraschallwandler 2 und dem zweiten Ultraschaschallwandler 3 ausbreitet. Im dargestellten Ausführungsbeispiel weist der Messpfad 7 keine Reflexion an der Messrohrwand 8 auf. Vielmehr ist der Messpfad 7 im Wesentlichen z-förmig ausgebildet.

Zudem ist an dem oberhalb der Messrohrlängsachse 15 angeordnetem Ultraschallwandlerhalter 5a ein vierter Ultraschallwandler 16 angeordnet, der im Betrieb ein Signal senkrecht zur Messrohrlängsachse 15 aussendet. Am zweiten Ultraschallwandlerhalter ist der dritte Ultraschallwandler 4 angeordnet. Der dritte Ultraschallwandler 4 und der vierte Ultraschallwandler 16 spannen zwischen sich einen ersten Referenzpfad 9 auf.

Zudem ist in dem ersten Ultraschallwandlerhalter 5a ein Reflexionselement 14 in Form einer Nut angeordnet. Zwischen dem ersten Ultraschallwandler 2 und dem vierten Ultraschallwandler 16 ist ein zweiter Referenzpfad 13 ausgebildet, wobei das Reflexionselement 14 ein von dem ersten Ultraschallwandler 2 ausgesendetes zweites Referenzsignal auf den vierten Ultraschallwandler 16 reflektiert.

Für dieses Ausführungsbeispiel lauten die drei relevanten Gleichungen: ${t}_{/} = \frac{2 ⋅ \sqrt{{{A}_{1}}^{2} + {B}^{2}}}{{c}_{1}} + \frac{2 ⋅ {A}_{1} ⋅ \left({{A}_{2}}^{2}+{T}^{2}\right)}{{c}_{1} ⋅ {A}_{2} ⋅ \sqrt{{{A}_{1}}^{2} + {B}^{2}}} + \frac{2 ⋅ {A}_{1} ⋅ \left({{A}_{3}}^{2}+{R}^{2}\right)}{{c}_{1} ⋅ {A}_{3} ⋅ \sqrt{\left({{A}_{1}}^{2}+{B}^{2}\right)}}$ (1) ${t}_{⊥} = \frac{2 ⋅ B}{{c}_{1}} + \frac{2 ⋅ T ⋅ {A}_{1} \sqrt{\left({{A}_{2}}^{2}+{T}^{2}\right)}}{{c}_{1} ⋅ {A}_{2} ⋅ \sqrt{\left({{A}_{1}}^{2}+{B}^{2}\right)}} + \frac{2 ⋅ R ⋅ {A}_{1} ⋅ \sqrt{\left({{A}_{3}}^{2}+{R}^{2}\right)}}{{c}_{1} ⋅ {A}_{3} \sqrt{\left({{A}_{1}}^{2}+{B}^{2}\right)}}$ (2) ${A}_{3} = A - {A}_{1} - {A}_{2}$ (3)

Wie oben auch dargelegt, werden die Parameter B, T, R, A und c1 als bekannt vorausgesetzt. Insbesondere der Schallgeschwindigkeit c1 kann mittels des zweiten Referenzsignals gemessen werden.

Durch Lösung des Gleichungssystems lassen sich die Parameter A₁, A₂ und A₃ ermitteln.

Aus den Parameter A₁, A₂ und A₃ lassen sich dann die Schallgeschwindigkeiten c₂ und c₃ sowie die Weglängen L₁, L₂ und L₃ folgendermaßen bestimmen: ${L}_{1} = 2 ⋅ \sqrt{\left({{A}_{1}}^{2}+{B}^{2}\right)}$ ${L}_{2} = 2 ⋅ \sqrt{\left({{A}_{2}}^{2}+{T}^{2}\right)}$ und ${L}_{3} = 2 ⋅ \sqrt{\left({{A}_{3}}^{2}+{R}^{2}\right)}$

Aus den ermittelten Weglängen lassen sich die aktuelle Verzögerungszeit td und daraus die Strömungsgeschwindigkeit v des Mediums besonders genau ermitteln.

Alternativ können statt der Längen A₁, A₂ und A₃ auch ein Winkel jeweils eines rechtwinkligen Dreiecks in einem Material als unbekannter Parameter dienen. In diesem Fall lauten die drei Gleichungen: ${t}_{/} = \frac{2 ⋅ B}{{c}_{1} ⋅ cos \left({β}_{1}\right)} + \frac{4 ⋅ T ⋅ cos \left(\frac{π}{2}-{β}_{1}\right)}{{c}_{1} ⋅ cos \left(2⋅{β}_{2}-\frac{π}{2}\right)} + \frac{4 ⋅ R ⋅ cos \left(\frac{π}{2}-{β}_{1}\right)}{{c}_{1} ⋅ cos \left(2⋅{β}_{3}-\frac{π}{2}\right)}$ (1) ${t}_{⊥} = \frac{2 ⋅ B}{{c}_{1}} + \frac{2 ⋅ T ⋅ cos \left(\frac{π}{2}-{β}_{1}\right)}{{c}_{1} ⋅ cos \left(\frac{π}{2}-{β}_{2}\right)} + \frac{2 ⋅ R ⋅ cos \left(\frac{π}{2}-{β}_{1}\right)}{{c}_{1} ⋅ cos \left(\frac{π}{2}-{β}_{3}\right)}$ (2) $A = B ⋅ tan \left({β}_{1}\right) + T ⋅ tan \left({β}_{2}\right) + R ⋅ tan \left({β}_{3}\right)$ (3)

In diesem Fall sind die Winkel β₁, β₂ und β₃ die zu bestimmenden unbekannten Parameter.

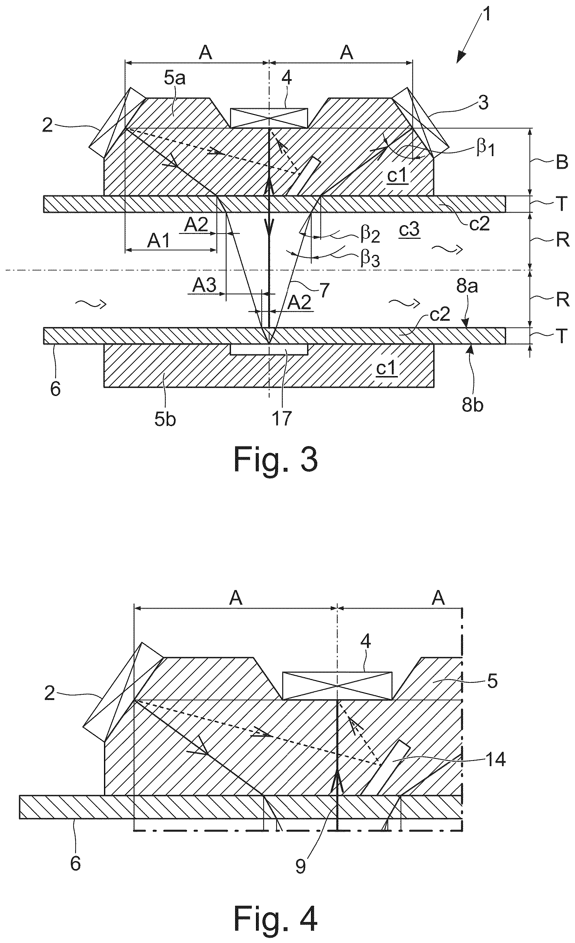

Fig. 3 zeigt ein weiteres Ausführungsbeispiel eines Ultraschalldurchflussmessgeräts 1, wobei eine Ultraschallwandlerhalteanordnung 5 an einem Messrohr 6 angeordnet ist und wobei ein erster Ultraschallwandler 2 und ein zweiter Ultraschallwandler 3 und ein dritter Ultraschallwandler 4 an der Ultraschallwandlerhalteanordnung 5 angeordnet sind. Der erste Ultraschallwandler 2 und der zweite Ultraschallwandler 3 spannen zwischen sich einen v-förmigen Messpfad 7 auf.

Im Unterschied zum ersten Ausführungsbeispiel wird das Messignal im Messrohr 6 nicht an der inneren Messrohrwand 8a reflektiert, sondern an der äußeren Messrohrwand 8b. Hierzu ist an dem unterhalb der Messrohrlängsachse angeordnetem Ultraschallwandlerhalter 5b eine Nut 17 zur Realisierung eines Materialübergangs angeordnet. Der Ultraschallwandlerhalter 5b ist im dargestellten Ausführungsbeispiel optional vorhanden, er kann also gemäß einer Ausgestaltung auch fehlen. Ein dem ersten Ultraschallwandlerhalter 5a gegenüberliegend angeordneter Ultraschallwandlerhalter 5b verbessert jedoch die mechanische Stabilität der Messanordnung, insbesondere bei der Installation des Durchflussmessgeräts an Messrohren aus Kunststoff mit kleinen Durchmessern.

Die drei relevanten Gleichungen des Gleichungssystems lauten für das dargestellte Ausführungsbeispiel: ${t}_{v} = \frac{2 ⋅ \sqrt{{{A}_{1}}^{2} + {B}^{2}}}{{c}_{1}} + \frac{4 ⋅ {A}_{1} ⋅ \left({{A}_{2}}^{2}+{T}^{2}\right)}{{c}_{1} ⋅ {A}_{2} ⋅ \sqrt{{{A}_{1}}^{2} + {B}^{2}}} + \frac{2 ⋅ {A}_{1} ⋅ \left({{A}_{3}}^{2}+4⋅{R}^{2}\right)}{{c}_{1} ⋅ {A}_{3} ⋅ \sqrt{\left({{A}_{1}}^{2}+{B}^{2}\right)}}$ (1) ${t}_{⊥} = \frac{2 ⋅ B}{{c}_{1}} + \frac{4 ⋅ T ⋅ {A}_{1} \sqrt{\left({{A}_{2}}^{2}+{T}^{2}\right)}}{{c}_{1} ⋅ {A}_{2} ⋅ \sqrt{{{A}_{1}}^{2} + {B}^{2}}} + \frac{4 ⋅ R ⋅ {A}_{1} ⋅ \sqrt{\left({{A}_{3}}^{2}+4⋅{R}^{2}\right)}}{{c}_{1} ⋅ {A}_{3} \sqrt{\left({{A}_{1}}^{2}+{B}^{2}\right)}}$ (2) ${A}_{3} = A - {A}_{1} - \left(2⋅{A}_{2}\right)$ (3)

Wie oben auch dargelegt, werden die Parameter B, T, R, A und c1 als bekannt vorausgesetzt. Insbesondere der Schallgeschwindigkeit c1 kann mittels des zweiten Referenzsignals gemessen werden.

Durch Lösung des Gleichungssystems lassen sich die Parameter A₁, A₂ und A₃ ermitteln.

Aus den Parameter A₁, A₂ und A₃ lassen sich dann die Schallgeschwindigkeiten c₂ und c₃ sowie die Weglängen L₁, L₂ und L₃ folgendermaßen bestimmen: ${L}_{1} = 2 ⋅ \sqrt{\left({{A}_{1}}^{2}+{B}^{2}\right)}$ ${L}_{2} = 4 ⋅ \sqrt{\left({{A}_{2}}^{2}+{T}^{2}\right)}$ und ${L}_{3} = 2 ⋅ \sqrt{\left({{A}_{3}}^{2}+4⋅{R}^{2}\right)}$

Aus den ermittelten Weglängen lassen sich die aktuelle Verzögerungszeit td und daraus die Strömungsgeschwindigkeit des Mediums besonders genau ermitteln.

Die folgenden drei Figuren 4, 5 und 6 zeigen Ausschnitte eines Ultraschalldurchflussmessgeräts 1, im Detail mögliche Ausgestaltungen eines zweiten Referenzpfades 9.

Fig. 4 zeigt ein Ausführungsbeispiel, wobei der zweite Referenzpfad 9 zwischen dem ersten Ultraschallwandler 2 und dem dritten Ultraschallwandler 4 angeordnet ist. Hierzu ist in der Ultraschallwandlerhalteanordnung 5 ein Reflexionselement 14 in Form einer Nut ausgebildet.

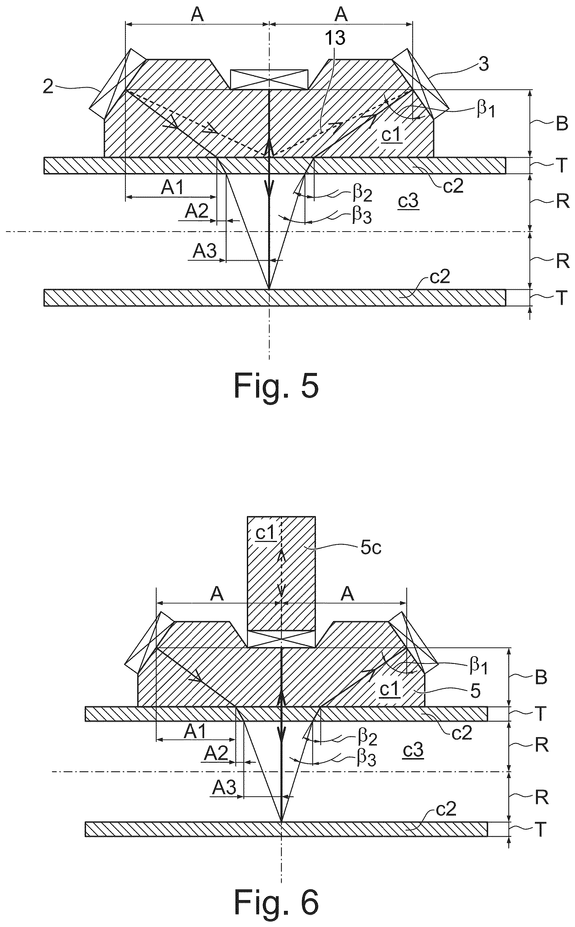

In Fig. 5 ist ein Ausführungsbeispiel dargestellt, in dem der zweite Referenzpfad 9 zwischen dem ersten Ultraschallwandler 2 und dem zweiten Ultraschallwandler 3 ausgebildet ist.

Fig. 6 zeigt ein Ausführungsbeispiel, in dem auf dem dritten Ultraschallwandler 4 ein Aufsatz 5c angeordnet ist, der aus dem Material der Ultraschallwandlerhalteanordnung 5 besteht. Von dem dritten Ultraschallwandler 4 wird ein zweites Referenzsignal in den Aufsatz 5c gesendet und nach einer Reflexion am Rand des Aufsatzes 5c wieder empfangen.

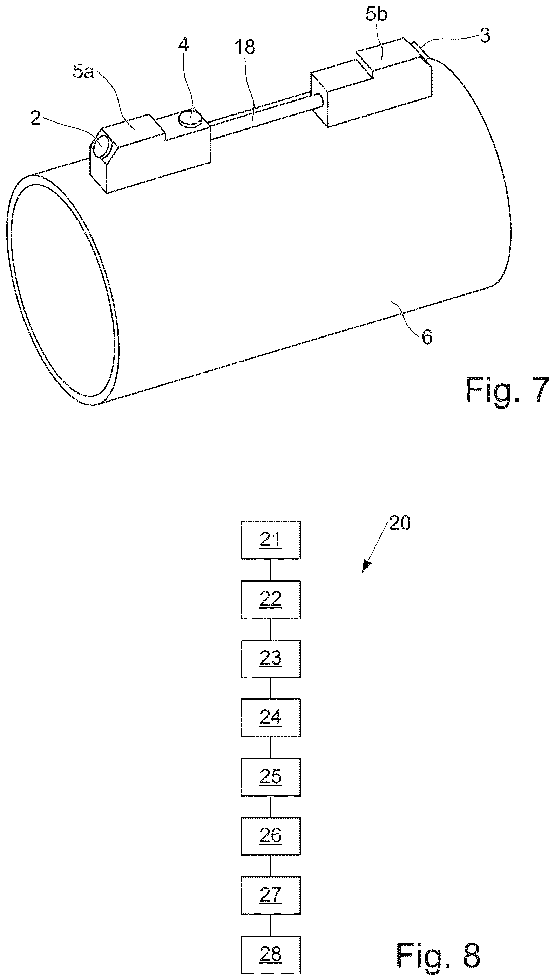

Fig. 7 zeigt ein weiteres Ausführungsbeispiel eines Ultraschalldurchflussmessgeräts 1, wobei die Ultraschallwandlerhalteanordnung 5 zwei Ultraschallwandlerhalter 5a, 5b aufweist, wobei an dem ersten Ultraschallwandlerhalter 5a ein erster Ultraschallwandler 2 und ein dritter Ultraschallwandler 4 angeordnet ist, wobei an dem zweiten Ultraschallwandlerhalter 5b ein zweiter Ultraschallwandler 3 angeordnet ist. Zwischen dem ersten Ultraschallwandler 2 und dem zweiten Ultraschallwandler 3 ist ein Separator 18 angeordnet. Im nicht fixierten Zustand kann vor der Inbetriebnahme im Rahmen eines Kalibrationsprozesses der Abstand des ersten Ultraschallwandlerhalters 5a und des zweiten Ultraschallwandlerhalters 5b eingestellt werden. Denkbar ist ebenfalls, dass unterschiedliche Separatoren 18 für unterschiedliche Anwendungen geeignet sind. Optional kann der Separator 18 auch nach der Installation wieder entfernt werden. Durch die Installation der Ultraschallwandler 2, 3 mit Hilfe des Separators kann gewährleistet werden, dass die Ultraschallwandler 2, 3 den Abstand 2A zueinander aufweisen.

Fig. 8 zeigt ein Ausführungsbeispiel eines Verfahrens 20 zum Betreiben eines Ultraschalldurchflussmessgeräts 1, wobei das Ultraschalldurchflussmessgerät 1 wie in Fig. 1 dargestellt ausgebildet ist.

Das Verfahren 20 umfasst die folgenden Schritte:
- Aussenden 21 des Messsignals durch den ersten Ultraschallwandler 2 bzw. den zweiten Ultraschallwandler 3, wobei sich das Messsignal entlang des Messpfades 7 ausbreitet,
- Empfangen 22 des Messsignals durch den zweiten Ultraschallwandler 3 bzw. den ersten Ultraschallwandler 2 und Bestimmen der Laufzeit tₜₒₜₐₗ, wobei tₜₒₜₐₗ der Gesamtlaufzeit des Messsignals zwischen dem ersten Ultraschallwandler 2 und dem zweiten Ultraschallwandler 3 entspricht,
- Aussenden 23 des Referenzsignals durch den dritten Ultraschallwandler 4 oder einen weiteren Ultraschallwandler,
- Empfangen 24 des Referenzsignals durch den dritten Ultraschallwandler 4 und Bestimmen der Laufzeit t_{ref}, wobei t_{ref} der Laufzeit der Referenzsignals zwischen dem Ultraschallwandler, der das Referenzsignal aussendet und dem dritten Ultraschallwandler 4 entspricht,
- Erstellung 25 eines Gleichungssystems mit drei Gleichungen basierend auf den bekannten konstruktiven Parametern A, B, R und T und auf der Schallgeschwindigkeit c₁ der Ultraschallwandlerhalteanordnung 5,

wobei die erste Gleichung einen Zusammenhang zwischen der Gesamtlaufzeit tₜₒₜₐₗ des Messsignals und den individuellen Laufzeiten des Messsignals über den Messpfad 7 durch die drei Materialien beschreibt, wobei die zweite Gleichung einen Zusammenhang zwischen der Referenzlaufzeit t_{ref} und den individuellen Laufzeiten des Referenzsignals über den Referenzpfad 9 durch die drei Materialien beschreibt und wobei die dritte Gleichung eine geometrische Beziehung zwischen dem Abstand des ersten Ultraschallwandlers 2 und des zweiten Ultraschallwandlers 3 und jeweils einem geometrischen Parameter des Messpfades der drei Materialien beschreibt,
wobei das Gleichungssystem höchstens drei unbekannte Parameter enthält, wobei jeweils ein unbekannter Parameter den Verlauf des Messpfads in einem Material bestimmt, insbesondere wobei die unbekannten Parameter geometrische Parameter, vorzugsweise Längen oder Winkel, sind,
   - Lösen 26 des Gleichungssystems und Bestimmen der unbekannten Parameter,
   - Bestimmung 27 des Verlaufs L des Messpfades und Bestimmung der Verzögerungszeit t_{d} des Messsignals, wobei die Verzögerungszeit t_{d} der Laufzeit des Messignals durch die Ultraschallwandlerhalteanordnung und die Messrohrwand entspricht und
   - Bestimmung 28 der Geschwindigkeit v des fließenden Mediums unter Berücksichtigung der aktuellen Verzögerungszeit t_{d}.

Unter dem Verlauf L des Messpfads 7 wird die geometrische Beschreibung des Messpfads 7 verstanden. Im Detail werden sowohl die Längen der Messpfadabschnitte L₁, L₂ und L₃ bestimmt, also auch die Winkel β₁, β₂ und β₃. Aus dem Winkel β₃ lässt sich der Messwinkel θ bestimmen. Für den in Fig. 1 gezeigten v-förmigen Verlauf des Messpfades gilt sin(θ)=(4·R)/L₃.

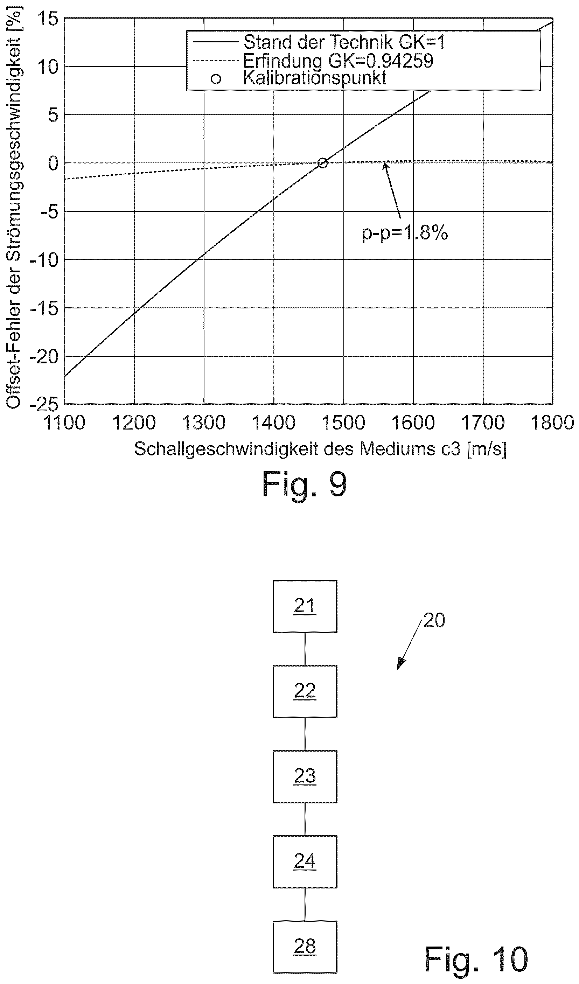

Mit dem dargestellten Verfahren lässt sich insbesondere bei kleinen Dimensionen des Messanordnung der Offset-Fehler, der auf die Abhängigkeit der Bestimmung der Strömungsgeschwindigkeit von der Schallgeschwindigkeit der unterschiedlichen Materialien zurückzuführen ist, nahezu vermeiden. Dies gilt sogar, wenn, wie nachfolgend in Fig. 9 gezeigt, die Grundannahmen eine gewisse Ungenauigkeit aufweisen.

Fig. 9 zeigt einen Vergleich zwischen der traditionellen Bestimmung der Strömungsgeschwidigkeit v eines strömenden Fluids, in der die Änderung der Verzögerungszeit bei Änderung der Schallgeschwindigkeit insbesondere des Mediums und der Messrorwand nicht berücksichtigt wird und einer Bestimmung der Strömungsgeschwindigkeit gemäß dem erfindungsgemäßen Verfahren. Zur Darstellung des großen Vorteils des erfindungsgemäßen Verfahrens wird hier dargestellt, was passiert, wenn die Eingaben der konstruktiven Parameter etwas ungenau sind, also nicht perfekt der Realität entsprechen. Die durch die konstruktiven Parameter bestimmte geometrische Konstante (GK) ist hier also nicht gleich 1. Im dargestellten Ausführungsbeispiel wurde als Wert für den Radius des Messrohrs ein Wert von 24,5 mm eingeben. In der Realität betrug der Radius jedoch 25 mm. In dem aus dem Stand der Technik bekannten Verfahren dagegen wurden die konstruktiven Parameter korrekt berücksichtigt (GK=1).

Die Darstellung zeigt auf den ersten Blick zunächst, dass bei Änderung der Schallgeschwindigkeit des Mediums der Fehler bei der Bestimmung der Stömungsgeschwindigkeit gemäß dem traditionellen Verfahren schnell sehr groß wird.

Dagegen kann eine Änderung der Schallgeschwindigkeit des Mediums mit dem erfindungsgemäßen Verfahren gut kompensiert werden. Selbst wenn, wie hier auch dargestellt, Ungenauigkeiten in der Eingabe der konstruktive Parameter gemacht werden, kann ein Offset-Fehler bei der Bestimmung der Strömungsgeschwindigkeit nahezu vermieden werden. Im dargestellten Ausführungsbeispiel beträgt der peak to peak Fehler höchstens 1,8% bei einer Änderung der Schallgeschwindigkeit zwischen 1100 m/s und 1800 m/s.

Fig. 10 zeigt ein weiteres Ausführungsbeispiel eines Verfahrens 20 zum Betreiben eines Ultraschalldurchflussmessgeräts, das gemäß Fig. 1 ausgebildet ist. Im Unterschied zu den Ausführungen zu Fig. 1 wird die Durchflussgeschwindigkeit nicht zwangsweise über das beschriebene Gleichungssystem bestimmt.

Die Steuer- und Auswerteeinheit 11 weist eine trainierte künstliche Intelligenz auf, die basierend auf konstruktiven Eingabeparameter, der Eingabe der Laufzeiten tₜₒₜₐₗ und t_{ref} sowie der Schallgeschwindigkeit c₁ der Ultraschallwandlerhalteanordnung die Strömungsgeschwindigkeit v des Mediums bestimmt.

Das Verfahren weist die folgenden Schritte auf:
- Aussenden 21 des Messsignals durch den ersten Ultraschallwandler 2 bzw. den zweiten Ultraschallwandler 3, wobei sich das Messsignal entlang des Messpfades 7 ausbreitet,
- Empfangen 22 des Messsignals durch den zweiten Ultraschallwandler 3 bzw. den ersten Ultraschallwandler 2 und Bestimmen der Gesamtlaufzeit tₜₒₜₐₗ, wobei tₜₒₜₐₗ der Gesamtlaufzeit des Messsignals zwischen dem ersten Ultraschallwandler 2 und dem zweiten Ultraschallwandler 3 entspricht,
- Aussenden 23 des ersten Referenzsignals durch den dritten Ultraschallwandler 4 oder einen weiteren Ultraschallwandler 16,
- Empfangen 24 des ersten Referenzsignals durch den dritten Ultraschallwandler 4 und Bestimmen der Referenzlaufzeit t_{ref}, wobei t_{ref} der Laufzeit der ersten Referenzsignals zwischen dem Ultraschallwandler 4, 16, der das erste Referenzsignal aussendet, und dem dritten Ultraschallwandler 4 entspricht,
- Bestimmung (28) der Geschwindigkeit v des fließenden Mediums unter Verwendung von bekannten konstruktiven Parametern der Messanordnung, den gemessenen Laufzeiten t_{ref} und tₜₒₜₐₗ und der Schallgeschwindigkeit c₁ der Ultraschallwandlerhalteanordnung 5.

Diese Verfahren weist ebenso den Vorteil auf, das mit Hilfe der erfindungsgemäßen Messungen der Laufzeiten und der bekannten konstruktiven Parameter sowie der Schallgeschwindigkeit c₁ ein besonders genauer Wert der Strömungsgeschwindigkeit ermittelt werden kann, da die Künstlichen Intelligenz durch entsprechendes Training eine Fehlerkorrektur des Zusammenhangs zwischen der Strömungsgeschwindigkeit und variierenden Schallgeschwindigkeiten des Mediums und/oder der Messrohrwand und/oder der Ultraschallwandlerhalteanordnung entwickelt.

### Bezugszeichen

- 1: Ultraschalldurchflussmessgerät
- 2: Erster Ultraschallwandler
- 3: Zweiter Ultraschallwandler
- 4: Dritter Ultraschallwandler
- 5: Ultraschallwandlerhalteanordnung
- 5a, 5b: Ultraschallwandlerhalter
- 5c: Aufsatz
- 6: Messrohr
- 7: Messpfad
- 8: Messrohrwand
- 8a: innere Messrohrwand
- 8b: äußere Messrohrwand
- 9: Referenzpfad
- 10a, 10b, 10c: Abstrahlement
- 11: Steuer- und Auswerteeinheit
- 12: Mediums
- 13: zweiter Referenzpfad
- 14: Reflexionselement
- 15: Messrohrlängsachse
- 16: vierter Ultraschwallwandler
- 17: Nut
- 18: Separator
- 19: Strömungsrichtung des Mediums
- 20: Verfahren zum Betreiben eines Ultraschalldurchflussmessgeräts
- 21: Aussenden des Messsignals
- 22: Empfangen des Messsignals
- 23: Aussenden des Referenzsignals
- 24: Empfangen des Referenzsignals
- 25: Erstellung eines Gleichungssystems mit drei Gleichungen
- 26: Lösen des Gleichungssystems
- 27: Bestimmung des Verlaufs L des Messpfades und Bestimmung der Verzögerungszeit t_{d} des Messsignals
- 28: Bestimmung der Geschwindigkeit v des fließenden Mediums

## Patentansprüche

1. Verfahren (20) zum Betreiben eines Ultraschalldurchflussmessgeräts (1), wobei das Ultraschalldurchflussmessgerät (1)
wenigstens ein Ultraschallwandlerpaar mit einem ersten Ultraschallwandler (2) und einem zweiten Ultraschallwandler (3),
wenigstens einen dritten Ultraschallwandler (4),
wenigstens eine Ultraschallwandlerhalteanordnung (5) und eine Steuer- und Auswerteeinheit (11) aufweist,
wobei die Ultraschallwandlerhalteanordnung (5) wenigstens einen Ultraschallwandlerhalter (5a, 5b) umfasst,
wobei die Ultraschallwandlerhalteanordnung (5) an einem Messrohr (6) angeordnet ist, wobei das Messrohr (6) eine Messrohrwand (8) aufweist, wobei in dem Messrohr (6) ein Medium (12) vorhanden ist, insbesondere wobei das Medium (12) durch das Messrohr (6) fließt,
wobei der erste und der zweite Ultraschallwandler (2,3) an der Ultraschallwandlerhalteanordnung (5) angeordnet sind,
wobei der erste Ultraschallwandler (2) und der zweite Ultraschallwandler (3) in Fließrichtung des Mediums (12) betrachtet derart versetzt zueinander angeordnet sind, dass sie zwischen sich einen Messpfad (7), der durch die Ultraschallwandlerhalteanordnung (5), die Messrohrwand (8) und das Medium (12) verläuft, aufspannen, sodass ein von dem ersten Ultraschallwandler (2) ausgesendetes Messsignal von dem zweiten Ultraschallwandler (3) empfangen wird und umgekehrt, wobei das Messsignal drei Materialien, nämlich die Ultraschallwandlerhalteanordnung (5), die Messrohrwand (8) und das Medium (12) durchläuft, und
wobei der dritte Ultraschallwandler (4) derart an der Ultraschallwandlerhalteanordnung (5) angeordnet ist, dass er wenigstens einen ersten Referenzpfad (9), der durch die Ultraschallwandlerhalteanordnung (5), die Messrohrwand (8) und das Medium (12) verläuft, definiert, wobei der dritte Ultraschallwandler (4) derart ausgebildet und angeordnet ist, dass er ein Referenzsignal, das sich entlang des ersten Referenzpfades (9) ausbreitet, empfängt und optional auch aussendet,
wobei die Steuer- und Auswerteeinheit (11) zur Ansteuerung der Ultraschallwandler (2, 3, 4, 16) und zur Auswertung der von den Ultraschallwandlern (2, 3, 4, 16) empfangenen Signale ausgebildet ist,
**dadurch gekennzeichnet,**
**dass** das Verfahren (20) die folgenden Schritte umfasst:
- Aussenden (21) des Messsignals durch den ersten Ultraschallwandler (2) bzw. den zweiten Ultraschallwandler (3), wobei sich das Messsignal entlang des Messpfades (7) ausbreitet,
- Empfangen (22) des Messsignals durch den zweiten Ultraschallwandler (3) bzw. den ersten Ultraschallwandler (2) und Bestimmen der Gesamtlaufzeit tₜₒ₋ₜₐₗ, wobei tₜₒₜₐₗ der Gesamtlaufzeit des Messsignals zwischen dem ersten Ultraschallwandler (2) und dem zweiten Ultraschallwandler (3) entspricht,
- Aussenden (23) des ersten Referenzsignals durch den dritten Ultraschallwandler (4) oder einen weiteren Ultraschallwandler (16),
- Empfangen (24) des ersten Referenzsignals durch den dritten Ultraschallwandler (4) und Bestimmen der Referenzlaufzeit t_{ref}, wobei t_{ref} der Laufzeit der ersten Referenzsignals zwischen dem Ultraschallwandler (4, 16), der das erste Referenzsignal aussendet, und dem dritten Ultraschallwandler (4) entspricht,
- Bestimmung (28) der Geschwindigkeit v des fließenden Mediums unter Verwendung von bekannten konstruktiven Parametern der Messanordnung, den gemessenen Laufzeiten t_{ref} und tₜₒₜₐₗ und der Schallgeschwindigkeit c₁ der Ultraschallwandlerhalteanordnung (5).

2. Verfahren (20) nach Anspruch 1, **dadurch gekennzeichnet, dass** das Verfahren zur Bestimmung der Geschwindigkeit v des fließenden Mediums folgende Schritte umfasst:
- Bestimmung von drei unbekannten Parametern unter Verwendung der bekannten konstruktiven Parameter der Messanordnung, den gemessenen Laufzeiten t_{ref} und tₜₒₜₐₗ und der Schallgeschwindigkeit c₁ der Ultraschallwandlerhalteranordnung (5), wobei jeweils ein unbekannter Parameter den Verlauf des Messpfads in einem der drei Materialien bestimmt, insbesondere wobei die unbekannten Parameter geometrische Parameter, vorzugsweise Längen oder Winkel, sind,
- Bestimmung des Verlaufs des Messpfades (7) in der Ultraschallwandlerhalteranordnung (5), in der Messrohrwand (8) und im Medium (12) und Bestimmung der Verzögerungszeit t_{d} des Messsignals, wobei die Verzögerungszeit t_{d} der Laufzeit des Messignals durch die Ultraschallwandlerhalteranordnung (5) und durch die Messrohrwand (8) entspricht, und
- Bestimmung (28) der Geschwindigkeit v des fließenden Mediums unter Berücksichtigung der aktuellen Verzögerungszeit t_{d}.

3. Verfahren (20) nach Anspruch 1 oder 2, **dadurch gekennzeichnet, dass** die Geschwindigkeit v des strömenden Mediums (12) mit einer trainierten künstlichen Intelligenz, insbesondere einem trainierten künstlichen neuronalen Netzwerk, ermittelt wird, wobei die künstliche Intelligenz als Eingangsgrößen die konstruktiven Parameter, die gemessenen Laufzeiten t_{ref} und tₜₒₜₐₗ und die Schallgeschwindigkeit c₁ der Ultraschallwandlerhalteanordnung (5) erhält und wobei die künstliche Intelligenz als Ausgangsgröße zumindest die Geschwindigkeit v des fließenden Mediums (12) liefert.

4. Verfahren (20) nach Anspruch 2 oder 3, **dadurch gekennzeichnet, dass** das Verfahren zur Ermittlung der unbekannten Parameter die folgenden Schritte umfasst:
- Erstellung (25) eines Gleichungssystems mit drei Gleichungen,
wobei die erste Gleichung einen Zusammenhang zwischen der Gesamtlaufzeit tₜₒₜₐₗ des Messsignals und den individuellen Laufzeiten des Messsignals über den Messpfad (7) durch die Ultraschallwandlerhalteranordnung (5), die Messrohrwand (8) und das Medium (12) unter Berücksichtigung der konstruktiven Parameter beschreibt, wobei die zweite Gleichung einen Zusammenhang zwischen der Referenzlaufzeit t_{ref} und den individuellen Laufzeiten des Referenzsignals über den Referenzpfad durch die Ultraschallwandlerhalteranordnung (5), die Messrohrwand (8) und das Medium (12) unter Berücksichtigung der konstruktiven Parameter beschreibt und wobei die dritte Gleichung eine geometrische Beziehung zwischen dem Abstand des ersten Ultraschallwandlers (2) und des zweiten Ultraschallwandlers (3) und drei geometrischen Parametern beschreibt, wobei ein geometrischer Parameter den Verlauf des Messpfads (7) in der Ultraschallwandlerhalteranordnung (5), ein geometrischer Parameter den Verlauf des Messpfads (7) in der Messrohrwand (8) und wobei ein geometrischer Parameter den Verlauf des Messpfads (7) im Medium (12) beschreibt,
wobei das Gleichungssystem höchstens drei unbekannte Parameter enthält, wobei jeweils ein unbekannter Parameter den Verlauf des Messpfads (7) in einem der drei Materialien bestimmt, insbesondere wobei die unbekannten Parameter geometrische Parameter, vorzugsweise Längen oder Winkel, sind,
- Lösen (26) des Gleichungssystems und Bestimmen der unbekannten Parameter.

5. Verfahren (20) nach einem der Ansprüche 1 bis 4, **dadurch gekennzeichnet, dass** der erste Ultraschallwandler (2) und der zweite Ultraschallwandler (3) in einem Abstand 2A zueinander angeordnet sind und dass die dritte Gleichung den Zusammenhang zwischen dem halben Abstand A des ersten Ultraschallwandlers (2) und des zweiten Ultraschallwandlers (3) und den drei Parametern A₁, A₂ und A₃ beschreibt, wobei A₁ dem Anteil des Messpfades (7) in der Ultraschallwandlerhalteranordnung (5) in Verbindungsrichtung des ersten Ultraschallwandlers (2) und des zweiten Ultraschallwandlers (3) entspricht, wobei A₂ dem Anteil des Messpfades (7) in der Messrohrwand (8) in Verbindungsrichtung des ersten Ultraschallwandlers (2) und des zweiten Ultraschallwandlers (3) entspricht und wobei A₃ dem Anteil des Messpfades (7) im Medium in Verbindungsrichtung des ersten Ultraschallwandlers (2) und des zweiten Ultraschallwandlers (3) entspricht.

6. Verfahren (20) nach einem der Ansprüche 1 bis 5, **dadurch gekennzeichnet, dass** die erste Gleichung und/oder die zweite Gleichung des Gleichungssystems als konstruktive Parameter den Abstand B₁ des Abstrahlelementes (10a) des ersten Ultraschallwandlers (2) zum Messrohr (6) und/oder den Abstand B₂ des zweiten Ultraschallwandlers (3) zum Messrohr (6) und/oder den Abstand B₃ des Abstrahlelementes (10b) des dritten Ultraschallwandlers (4) zum Messrohr (6) und/oder die Dicke T der Messrohrwand (8) und/oder den inneren Radius R des Messrohrs (6) berücksichtigen, insbesondere wobei die Werte dieser Parameter bekannt sind.

7. Verfahren (20) nach einem der Ansprüche 1 bis 6, **dadurch gekennzeichnet, dass** der Messpfad (7) in Messpfadabschnitte L₁, L₂ und L₃ unterteilt wird, wobei der Messpfadabschnitt L₁ in der Ultraschallwandlerhalteanordnung (5) verläuft, wobei der Messpfadabschnitt L₂ in der Messrohrwand (8) verläuft und wobei der Messpfadabschnitt L₃ im Medium (12) verläuft und wobei jeder Messpfadabschnitt L₁, L₂, L₃ wenigstens eine Hypotenuse eines rechtwinkligen Dreiecks umfasst.

8. Verfahren (20) nach einem der Ansprüche 1 bis 7, **dadurch gekennzeichnet, dass** der erste Referenzpfad (9) senkrecht zur Strömungsrichtung des Mediums die Ultraschallwandlerhalteanordnung (5), die Messrohrwand (8) und das Medium (12) durchläuft, sodass keine Brechung an den Materialübergängen stattfindet.

9. Verfahren (20) nach einem der Ansprüche 1 bis 8, **dadurch gekennzeichnet, dass** in der ersten Gleichung die Laufzeiten des Messsignals entlang des Messpfads (7) durch die Messrohrwand (8) und durch das Medium (7) in Abhängigkeit von der Schallgeschwindigkeit c₁ der Ultraschallwandlerhalteanordnung (5) ausgedrückt werden und/oder dass in der zweiten Gleichung die Laufzeiten des Messsignals entlang des Messpfads (7) durch die Messrohrwand (8) und durch das Medium in Abhängigkeit von der Schallgeschwindigkeit c₁ der Ultraschallwandlerhalteanordnung (5) ausgedrückt werden.

10. Verfahren (20) nach einem der Ansprüche 1 bis 9, **dadurch gekennzeichnet, dass** mit der Lösung des Gleichungssystems die Gesamtweglänge L des Messpfads und/oder die Länge der einzelnen Messpfadabschnitte L₁, L₂ und L₃ und/oder der Einkoppelwinkel β₂ des Messsignals in die Messrohrwand (8) und/oder der Einkoppelwinkel β₃ des Messsignals in das Medium (12) und/oder die Schallgeschwindigkeit c₂ der Messrohrwand (8) und/oder die Schallgeschwindigkeit c₃ des Mediums (12) bestimmt werden.

11. Verfahren (20) nach einem Ansprüche 1 bis 10, **dadurch gekennzeichnet, dass** ein zweiter Referenzpfad (13) vorhanden ist, wobei der zweite Referenzpfad (13) nur innerhalb des Materials der Ultraschallwandlerhalteanordnung (5) verläuft, und wobei die Schallgeschwindigkeit c₁ der Ultraschallwandlerhalteanordnung (5) durch eine Laufzeitmessung eines zweiten Referenzsignals, dass sich entlang des zweiten Referenzpfades (9, 13) ausbreitet, bestimmt wird.

12. Verfahren (20) nach einem der Ansprüche 1 bis 11, **dadurch gekennzeichnet, dass** das Gleichungssystem unter Beachtung von Randbedingungen der zu bestimmenden unbekannten Parameter numerisch gelöst wird.

13. Verfahren (20) nach einem der Ansprüche 1 bis 12, **dadurch gekennzeichnet, dass** der Abstand B₃ des Abstrahlelementes (10b) des dritten Ultraschallwandlers (4) zum Messrohr (6) und/oder die Dicke T der Messrohrwand (8) und/oder der innere Radius R des Messrohrs (6) durch eine Laufzeitmessung von einer Reflexion des ersten Referenzsignals gemessen werden.

14. Ultraschalldurchflussmessgerät (1) umfassend
wenigstens ein Ultraschallwandlerpaar mit einem ersten Ultraschallwandler (2) und einem zweiten Ultraschallwandler (3),
wenigstens einen dritten Ultraschallwandler (4),
wenigstens eine Ultraschallwandlerhalteanordnung (5), wobei die Ultraschallwandlerhalteanordnung (5) wenigstens einen Ultraschallwandlerhalter (5a, 5b) umfasst, wobei die wenigstens eine Ultraschallwandlerhalteanordnung (5) im Betrieb an einem Messrohr (6) angeordnet ist, wobei das Messrohr (6) eine Messrohrwand (8) aufweist, wobei im Betrieb ein Medium (12) in dem Messrohr (6) angeordnet ist, insbesondere wobei im Betrieb ein Medium (12) durch das Messrohr (12) fließt,
wobei der erste Ultraschallwandler (2) und der zweite Ultraschallwandler (3) an der Ultraschallwandlerhalteanordnung (5) angeordnet sind,
wobei der erste Ultraschallwandler (2) und der zweite Ultraschallwandler (3) in Fließrichtung des Mediums (12) betrachtet derart versetzt zueinander angeordnet sind, dass sie zwischen sich einen Messpfad (7), der durch die Ultraschallwandlerhalteanordnung (5), die Messrohrwand (8) und das Medium (12) verläuft, aufspannen, sodass ein von dem ersten Ultraschallwandler (2) ausgesendetes Messsignal von dem zweiten Ultraschallwandler (3) empfangen wird und umgekehrt, wobei das Messsignal drei Materialien, nämlich die Ultraschallwandlerhalteanordnung (5), die Messrohrwand (8) und das Medium (12) durchläuft, und
wobei der dritte Ultraschallwandler (4) derart an der Ultraschallwandlerhalteanordnung (5) angeordnet ist, dass er wenigstens einen ersten Referenzpfad (9), der durch die Ultraschallwandlerhalteanordnung (5), die Messrohrwand (8) und das Medium (12) verläuft, definiert, wobei der dritte Ultraschallwandler (4) derart ausgebildet und angeordnet ist, dass er ein Referenzsignal, das sich entlang des ersten Referenzpfades (9) ausbreitet, empfängt und optional auch aussendet,
wobei die Steuer- und Auswerteeinheit (11) zur Ansteuerung der Ultraschallwandler (2, 3, 4, 16) und zur Auswertung der von den Ultraschallwandlern (2, 3, 4, 16) empfangenen Signale ausgebildet ist,
**dadurch gekennzeichnet,**
**dass** die Steuer- und Auswerteeinheit (11) zur Durchführung eines Verfahrens nach einem der Ansprüche 1 bis 13 ausgebildet ist.

15. Ultraschalldurchflussmessgerät (1) nach Anspruch 14, **dadurch gekennzeichnet, dass** der dritte Ultraschallwandler (4) derart an der Ultraschallwandlerhalteanordnung (5) angeordnet ist, dass der erste Referenzpfad (9) senkrecht zur Fließrichtung des strömenden Mediums (12) verläuft.

16. Ultraschalldurchflussmessgerät (1) nach Anspruch 14 oder 15, **dadurch gekennzeichnet, dass** die Ultraschallwandler (2, 3, 4, 16) derart angeordnet sind, dass ein zweiter Referenzpfad (13), über den sich ein zweites Referenzsignal ausbreitet, vorhanden ist, wobei der zweite Referenzpfad (13) nur innerhalb des Materials der Ultraschallwandlerhalteanordnung (5) verläuft.

17. Ultraschalldurchflussmessgerät (1) nach einem der Ansprüche 14 bis 16, **dadurch gekennzeichnet, dass** in der Ultraschallwandlerhalteanordnung (5) ein Reflexionselement (14) zur Reflexion des zweiten Referenzsignals ausgebildet ist.

18. Ultraschalldurchflussmessgerät (1) nach einem der Ansprüche 14 bis 17, **dadurch gekennzeichnet, dass** die Ultraschallwandler (2, 3, 4, 16) in Fließrichtung des Mediums betrachtet fest, also nicht verschiebbar, auf der wenigstens einen Ultraschallwandlerhalteanordnung (5) angeordnet sind.

19. Ultraschalldurchflussmessgerät (1) nach einem der Ansprüche 14 bis 18, **dadurch gekennzeichnet, dass** das Ultraschalldurchflussmessgerät (1) höchstens drei oder höchstens vier Ultraschallwandler (2, 3, 4, 16) aufweist.
